# NEUE EUROPÄISCHE PATENTSCHRIFT

(11) **EP 2 784 232 B2**
(45) Veröffentlichungstag und Bekanntmachung des Hinweises auf die Entscheidung über den Einspruch: **08.01.2020**
(45) Hinweis auf die Patenterteilung: 16.03.2016
(21) Anmeldenummer: 14161054.3
(22) Anmeldetag: 21.03.2014
(51) Int. Cl.: E04B 1/68, E06B 1/62

(54) **Dichtband**
Sealing tape
Bande d'étanchéité

(30) Priorität: 28.03.2013 DE 202013101372 U
(43) Veröffentlichungstag der Anmeldung: 01.10.2014
(73) Patentinhaber: tremco illbruck GmbH, 92439 Bodenwöhr (DE)
(72) Erfinder: Köppl, Alfred, 92431 Neunburg v.W. (DE); Komma, Markus, 93133 Burglengenfeld (DE)
(74) Vertreter: Bittner, Bernhard

(56) Entgegenhaltungen:
- EP-A1- 0 317 833
- EP-A2- 2 112 292
- DE-A1- 2 050 845
- DE-A1-102009 013 107
- DE-U1-202009 011 619
- DE-U1-202010 012 343
- US-A- 4 181 711
- US-A1- 2012 247 042

## Beschreibung

Die Erfindung betrifft ein Schaumstoff-Dichtband zur Abdichtung einer Fuge zwischen benachbarten Bauteilen insbesondere nach dem Oberbegriff von Anspruch 1, wobei das Dichtband zwei gegenüberliegende Breitseiten aufweist, welche an zwei gegenüberliegenden Kontaktflächen der beiden Bauteile unter Abdichtung der Fuge anlegbar oder mit diesen zur Zusammenwirkung bringbar sind, und mit zwei die Breitseiten verbindenden Schmalseiten, wobei das Dichtband einen Schaumstoffkorpus aufweist, welcher ein- oder mehrteilig ausgebildet sein kann, wobei der Schaumstoffkorpus eine Breitseite als Basis aufweist, wobei der Korpus an der Basis als über dessen Breite ununterbrochen durchgehendes Schaumstoffteil ausgebildet ist und an der anderen Breitseite über die Breitenerstreckung der Basis ein Höhenprofil mit einem Höhenbereich und einem Niederbereich aufweist, wobei Höhen- und/oder Niederbereich jeweils unabhängig voneinander vorzugsweise im Bereich von oder an einer der Schmalseiten angeordnet ist.

Gattungsgemäße Schaumstoff-Dichtbänder mit Höhen- und Niederbereich sind beispielsweise aus der DE 20 2009 011 619 U1 bekannt. Vermittels des Höhenprofils an einer Breitseite bilden derartige Dichtbänder in Einbaulage in einer Fuge Zonen unterschiedlicher Materialdichte und damit mit unterschiedlichem Wasserdampfdiffusionswiderstand aus. Bei dem gattungsgemäßen Dichtband ist der Schaumstoffkorpus des Dichtbandes zumeist zumindest im Bereich des Höhenprofils einstückig ausgebildet, wobei der derart profilierte Dichtbandabschnitt gegebenenfalls auf einem weiteren, sich über die Dichtbandbreite erstrecken Schaumstoffstreifen angeordnet sein kann. Derartige Dichtbänder sind insbesondere durch sogenannte Formschnittverfahren herstellbar, bei welchen eine Höhenprofilierung des jeweiligen Schaumstoffkorpus durch ein an diesem angewandtes Schneidverfahren erzielt wird. Durch derartige Formschnittverfahren können Dichtbänder mit geschwungenem oder bogenförmigem Höhenprofil, welches monoton oder streng monoton verlaufen kann, ausgebildet werden. Hierdurch kann beispielsweise auch der Wasserdampfdiffusionswiderstand des Dichtbandes über seine Breite kontinuierlich verändert werden, was Vorteile in Bezug auf die Wasserdampfabfuhr durch das Dichtband von der Rauminnen-zur Raumaußenseite hin ergeben kann. Bei derartigen Formschnittverfahren werden zumeist Teilbereiche einer Schaumstoffbahn, deren Breite einem Mehrfachen der Dichtbandbreite betragen kann, derart deformiert, dass bei Durchschneiden der Bahn bspw. in einer Ebene parallel zu der Hauptmittelebene der Bahn höhenprofilierte Bahnabschnitte resultieren, bezogen auf den vollständig frei entspannten Zustand dieser Abschnitte. Die Deformation und damit Ausbildung der Höhenabschnitte kann in Zonen erfolgen, welche in Bahnlängsrichtung liegen. Die profilierten Bahnabschnitte können anschließend in mehrere Dichtbänder zerlegt werden kann. Die Deformation der Bahn kann durch geeignete Werkzeuge wie beispielsweise profilierte Anpressrollen erfolgen.

Die derart erhaltenen, herkömmlichen Dichtbänder weisen oftmals ein unbeabsichtigt ungleichmäßiges Höhenprofil auf, welches sich in Längsrichtung des Dichtbandes ändern kann, oder aber bei Dichtbändern innerhalb einer Charge oder zwischen verschiedenen Chargen. So können bspw. an einer Seitenfläche des Dichtbandes vorgesehene Höhenbereiche lateral zum Dichtbandinneren verschoben sein, so dass an der Schmalseite tatsächlich bereits ein Korpusbereich geringerer Höhe gegeben ist. Entsprechend können anstelle von an einer Dichtbandschmalseite vorzusehenden Niederbereichen mit minimaler Korpushöhe bereits Dichtbandbereiche größerer Höhe vorliegen, das Profil also eine unerwünschte Senke aufweisen. Dies kann gegebenenfalls zu unerwünschten Effekten bei Einbausituation des Dichtbandes in einer Fuge führen. Diese Probleme treten insbesondere auf, wenn das Dichtband eine nur geringe Höhe aufweist, sodass Profilungenauigkeiten sich besonders stark bemerkbar machen, und/oder bei vergleichsweise langen Dichtbändern mit Längen von bspw. ohne Weiteres mehr als 100 m oder mehr als 200 m Länge, wie sie bei der Herstellung von langen Bauteilen mit Dichtung wie von Verbundplatten zum Gebäudebau gegeben sein können, wobei die Dichtbänder mit den Bauteilen wie Verbundplatten dauerhaft verbunden sein können. Hier ist eine besonders hohe Maßgenauigkeit erforderlich, insbesondere wenn die geringe Höhe und große Länge in Kombination auftreten.

Die DE 20 2009 011 619 U1 beschreibt ein gattungsgemäßes Dichtelement mit Höhenprofilierung.

Die DE 20 2010 012 343 U1 beschreibt ein Dichtelement mit zwei Schichten aus Polyethylenschaumstoff und zwischen diesen angeordnetem verzugssteifen Gitter.

Die EP 317833 A1 beschreibt ein Dichtungselement mit einem ersten Teil aus offenzelligem und elastisch rückstellfähigem Schaumstoff und einem zweiten Teil aus geschlossenzelligem Schaumstoff. An der oberen Außenfläche des offenzelligen Schaumstoffes ist eine Fadengitterstruktur angeordnet, welche mit einer Folie überdeckt ist.

Die US 4,181,711 beschreibt ein Dichtungsband aus zwei Teilstreifen mit einer dehnfesten Zwischenlage, welche eine Deformation durch eine Flüssigkeit verhindert und eine Wasserdichtigkeit des Dichtungsbandes bewirkt.

Die US 2012/0247042 A1 beschreibt Fußbodenpaneele mit einem Dichtungselement zwischen diesen.

Der Erfindung liegt die Aufgabe zugrunde, ein Dichtungsband mit Höhenprofil bereitzustellen, welches auch bei großen Dichtbandlängen und/oder Dichtbändern geringer Höhe mit hoher Formgenauigkeit herstellbar ist, insbesondere bei Herstellung in einem Formschnittverfahren.

Die Aufgabe wird durch ein Dichtband nach Anspruch 1 gelöst, bei welchem an der Basis des Schaumstoffkorpus eine Zugkraft-aufnehmende Materiallage angeordnet und zugkraftaufnehmend mit dem Schaumstoffkorpus befestigt ist, beispielsweise durch Verkleben. Der Schaumstoffkorpus mit Zugkraftaufnehmender Materiallage weist hierbei eine Reißdehnung von ≤ 25 % auf, bezogen auf einen Prüfabschnitt in Dichtbandlängsrichtung einer Breite von 13mm, vorzugsweise eines Längsabschnittes des Niederbereichs oder gegebenenfalls in Bezug auf jeden Längsabschnitt des Korpus über die Korpusbreite, also auch in jedem Korpusabschnitt der Höhenbereichs bzw. der Übergangsbereichs zwischen Höhen- und Niederbereich. In Kombination damit wird die Reißdehnung des Schaumstoffkorpus durch die Zugkraft-aufnehmende Materiallage um mehr als 85% bezogen auf die Reißdehnung des Korpus ohne Zugkraft-aufnehmende Materiallage verringert, bezogen auf einen Prüfabschnitt in Dichtbandlängsrichtung einer Breite von 13mm, vorzugsweise eines Abschnittes des Niederbereichs oder gegebenenfalls in Bezug auf jeden Längsabschnitt des Korpus über die Korpusbreite. Nach erster und zweiter Alternative ist der Niederbereich vorzugsweise jeweils der Bereich des Schaumstoffkorpus geringster Höhe.

Ferner wird die Erfindung durch eine Verbundplatte mit erfindungsgemäßem Dichtband und ein Herstellungsverfahren für dieses gelöst.

Durch diese Materiallage wird die Reißdehnung des Schaumstoffkorpus gemäß Anspruch 1 erniedrigt gegenüber einer Ausführungsform ohne diese Materiallage, wodurch das Dichtband bei der Profilierung, insbesondere im Formschnittverfahren, mit deutlich verbesserter Formgenauigkeit über dessen Länge und auch über verschiedene der Chargen herstellbar ist. Diese Dehnsperrfunktion macht sich insbesondere im Niederbereich des Dichtbandes als materialschwächeren Dichtbandbereich vorteilhaft bemerkbar. Die Zugkraft-aufnehmende Materiallage wirkt bei der Profilierung als Dehnsperre für den Korpus, wobei sich im Zuge der Erfindung herausgestellt hat, dass hierdurch eine genauere und reproduzierbarere Profilierung des Schaumstoffkorpus möglich ist. Ferner kann durch die Anordnung der Materiallage das Schaumstoffmaterial optimal an die übrigen zu erfüllenden Erfordernisse wie Luftdurchlässigkeit, Elastizität usw. angepasst werden, so dass das Schaumstoffmaterial in Bezug auf andere Eigenschaften als die Zugfestigkeits- und Dehneigenschaften optimiert bzw. bereitgestellt werden kann.

Die Angabe "bezogen auf einen Prüfabschnitt in Dichtbandlängsrichtung einer Breite von 13mm", insbesondere in Zusammenhang mit Zugfestigkeit, (maximaler) Zugkraft und Reißdehnung des Schaumstoffkorpus mit oder ohne Materiallage) bezieht sich allgemein im Rahmen der Erfindung auf die Breite des Probekörpers, in welcher der Bruch/das Reißen erfolgt (auch bei Bestimmung der maximalen Zugkraft). Um zuverlässige Ergebnisse zu erhalten wird allgemein ein Probekörper mit gegenüber dem Prüfabschnitt knochenförmig verbreiterten Endbereichen eingesetzt, wie unten beschrieben. Die Reißdehnung, maximale Zugkraft und Zugfestigkeit wird an einem dem Niederbereich entnommenen Probekörper mit Prüfabschnitt einer Breite von 13 mm bestimmt, sofern nichts anderes ausgeführt ist.

Die Zugkraft-aufnehmenden Materiallage wird im Folgenden auch kurz "Materiallage" genannt, der Schaumstoffkorpus auch kurz "Korpus". Der "Niederbereich" des Korpus ist jeweils der Bereich des Schaumstoffkorpus geringster Höhe, der "Höhenbereich" des Korpus ist jeweils der Bereich des Schaumstoffkorpus größter Höhe, jeweils bei vollständig frei expandiertem Dichtband und jeweils in Bezug auf die Höhenerstreckung Breitseite-Breitseite.

Die Zugkraft-aufnehmende Befestigung der Materiallage an dem Korpus ist jeweils im Rahmen der Erfindung vorzugsweise eine solche, welche nur zerstörend getrennt werden kann, bspw. Beschädigung des angrenzenden Bereichs des Schaumstoffmaterials des Korpus oder ggf. unter Zerstörung der Materiallage. Hierdurch ist bei der Korpusprofilierung sichergestellt, dass die Materiallage auf den Korpus wirkende Zugkräfte stets zuverlässig aufnimmt und so eine Erhöhung der Form- und Maßgenauigkeit der Korpusprofilierung bewirkt. Die Materiallage ist daher auch mit dem Korpus verbunden, wenn dieser in der Fuge abdichtend angeordnet ist.

In Bezug auf die Verbesserung der Form- und Maßgenauigkeit der Profilierung, insbesondere in einem Formschnittverfahren, ist es erfindungswesentlich, wenn der Schaumstoffkorpus mit Zugkraft-aufnehmender Materiallage eine Reißdehnung von ≤ 25 bezogen auf einen Korpuslängsabschnitt einer Breite von 13mm, vorzugsweise jeweils eines Abschnittes des Niederbereichs oder gegebenenfalls in Bezug auf jeden Längsabschnitt des Korpus über die Korpusbreite.

Insbesondere in Bezug auf die Verbesserung der Form- und Maßgenauigkeit der Profilierung, insbesondere in einem Formschnittverfahren, ist erfindungswesentlich, dass die Reißdehnung des Schaumstoffkorpus durch die Zugkraft-aufnehmende Materiallage um mehr als 85% bezogen auf die Reißdehnung des Korpus ohne Zugkraft-aufnehmende Materiallage verringert wird, jeweils bezogen auf einen Korpuslängsabschnitt einer Breite von 13mm, vorzugsweise jeweils eines Abschnittes des Niederbereichs oder gegebenenfalls in Bezug auf jeden Längsabschnitt des Korpus über die Korpusbreite.

Der Korpus mit Materiallage kann im Rahmen der Erfindung eine Reißdehnung von ≥ 1-2% oder ≥ 3-4% aufweisen, gegebenenfalls ≥ 5-7% oder unter Umständen ≥ 10%, jeweils bezogen auf einen Korpuslängsabschnitt einer Breite von 13mm.

Die Angabe "≥ x-y" (mit x, y jeweils zwei verschiedenen Zahlen), unabhängig von der in Bezug genommen physikalischen Einheit oder %-Angabe, umfasst generell jeweils auch die Angaben "≥ x" und "≥ y", unabhängig voneinander.

Die Angabe "≤ x-y" (mit x, y jeweils zwei verschiedenen Zahlen), unabhängig von der in Bezug genommen physikalischen Einheit oder %-Angabe, umfasst generell jeweils auch die Angaben "≤ x" und "≤ y", unabhängig voneinander.

Wird im Rahmen der Erfindung auf einen Schaumstoffkorpusabschnitt mit einer Materiallage Bezug genommen, so hat die Materiallage dieselbe Breite wie der Korpus, sofern sich aus dem Zusammenhang nichts anderes ergibt. Wird im Rahmen der Erfindung auf einen Materiallabschnitt Bezug genommen, so bezieht sich dies jeweils auf einen Längsabschnitt der Materiallage, welcher parallel zur Dichtbandlängsrichtung verläuft.

Das Weichschaumstoffmaterial des Korpus, insbesondere des höhenprofilierten Bereichs desselben, kann eine Reißdehnung von ≥ 100-125% oder ≥ 150-175% aufweisen, vorzugsweise ≤ 250-275% oder ≤ 300-400%. Hierbei haben sich die erfindungsgemäßen Maßnahmen aufgrund der vergleichsweise geringen Zugfestigkeit des Korpus besonders bewährt.

Vorzugsweise weist die Zugkraft-aufnehmende Materiallage eine solche maximale Zugkraft auf, dass durch diese die maximale Zugkraft des Schaumstoffkorpus mit Materiallage gegenüber dem Schaumstoffkorpus ohne Zugkraft-aufnehmende Materiallage erhöht ist, vorzugsweise um ≥ 2-3 N oder um ≥ 4-5 N, wobei die maximale Zugkraft jeweils bezogen ist auf einen Dichtbandlängsabschnitt einer Breite von 13mm; der Dichtbandlängsabschnitt ist hierbei vorzugsweise ein solcher des Niederbereichs oder gegebenenfalls in Bezug auf jeden Längsabschnitt des Korpus über die Korpusbreite. Dies hat sich zur Erzielung eine hohem Form- und Maßgenauigkeit besonders bewährt, insbesondere in Kombination mit der erfindungsgemäßen geringen Reißdehnung der Materiallage, auch um hier eine erhöhte Prozesssicherheit zu erzielen und unerwünschte Dehnbeanspruchungen des Dichtbandes insbesondere bei der Profilierung zu vermeiden. Die Zugkrafterhöhung des Schaumstoffkorpus durch die Zugkraft-aufnehmende Materiallage kann bis 20-30N oder bis 40-50N betragen, gegebenenfalls auch bis 75-100N oder darüber hinaus, bspw. bis 150-200N, oder darüber, sofern die Materiallage die Handhabung des Dichtstreifens im Übrigen, vorzugsweise auch dessen Konfektionierung als Rolle, nicht beeinträchtigt.

Vorzugsweise weist zur Erzielung einer hohen Form- und Maßgenauigkeit die Zugkraft-aufnehmende Materiallage eine solche maximale Zugkraft auf, so dass durch die zugkraftaufnehmend mit dem Korpus verbundene Materiallage die maximale Zugkraft des Schaumstoffkorpus mit Materiallage gegenüber dem Schaumstoffkorpus ohne Zugkraft-aufnehmende Materiallage erhöht ist, vorzugsweise um ≥ 25-35 % oder um ≥ 50-100 % erhöht, gegebenenfalls um ≥ 150-200 %, wobei die maximale Zugkraft jeweils bezogen ist auf einen Dichtbandlängsabschnitt einer Breite von 13mm. Der Dichtbandlängsabschnitt ist vorzugsweise ein solcher des Niederbereichs oder dies gilt gegebenenfalls in Bezug auf jeden Längsabschnitt des Korpus über die Korpusbreite. Die Zugkrafterhöhung des Korpus durch die Materiallage kann bis auf das 5 bis 10-fache oder vorzugsweise das 15 bis 20-fache oder bis auf das 30 bis 50-fache der maximalen Zugkraft des Korpus erfolgen, oder darüber hinaus.

Durch die Erhöhung der maximalen Zugkraft können die Zugkräfte auf den Schaumstoffkorpus bei der Korpusprofilierung praktisch vollständig und sicher von der Materiallage aufgenommen werden, wodurch eine hohe Maß- und Formgenauigkeit der Profilierung und des resultierenden Dichtbandes gewährleistet werden kann.

Gegebenenfalls kann die Zugkraft-aufnehmende Materiallage die Zugfestigkeit des Schaumstoffkorpus um ≥ 30-40 KPa (Kilopascal)oder um ≥ 50-75 KPa erhöhen, gegebenenfalls um ≥ 100-200 KPa, beispielsweise um bis zu 300-400 KPa oder um bis 750-2.000 KPa oder mehr, bestimmt als Differenz der Zugfestigkeit des Korpus mit Materiallage und ohne Materiallage (ggf. mechanisch abgetrennt). Dehn- oder Querkräfte bei der Höhenprofilierung oder anschließenden Konfektionierung des Dichtbandes können hierdurch effektiv aufgefangen werden, um eine hohe Profilgenauigkeit mit hoher Reproduzierbarkeit zu erzielen. Die jeweilige Zugfestigkeit gilt jeweils in Längsrichtung der Materiallage (Längsrichtung Materiallage gleich Längsrichtung Dichtband).

Besonders bevorzugt beträgt die Reißdehnung (Bruchdehnung)der Zugkraft-aufnehmende Materiallage (ohne Korpus) ≤ 40-50% oder ≤ 30-35% oder vorzugsweise ≤ 20-25%, besonders bevorzugt ≤ 10-15% oder ≤ 5-8%, ohne hierauf beschränkt zu sein. Hierdurch erhält der Verbund aus Schaumstoffkorpus und Materiallage eine vorteilhaft niedrige Reißdehnung, die insbesondere im Formschnittverfahren zu hoher Formgenauigkeit führt. Gegebenenfalls kann die Reißdehnung auch ≤ 60-75% betragen.

Alternativ oder in Kombination mit obiger Eigenschaft der Materiallage weist vorzugsweise das Material der Zugkraft-aufnehmenden Materiallage eine Reißkraft von ≥ 8-10 N/50mm auf, beispielsweise ≥ 12-15 N/50mm oder ≥ 17-20 N/50mm, beispielsweise bis zu 50-75 N/50mm oder bis zu 100-200N/50mm oder ggf. auch darüber hinaus.

Die Zugkraft-aufnehmende Verbindung der Materiallage mit dem Korpus erfolgt allgemein im Rahmen der Erfindung vorzugsweise durch Verklebung.

Der Schaumstoffkorpus ohne Zugkraft-aufnehmende Materiallage kann eine maximale Zugkraft von ≤ 30-40 N oder ≤ 15-20 N aufweisen, ohne weiteres auch ≤ 10-12 N, wobei die maximale Zugkraft bezogen ist auf einen Dichtbandlängsabschnitt einer Breite von 13mm, insbesondere jeweils eines Längsabschnittes des Niederbereichs oder gegebenenfalls in Bezug auf jeden Längsabschnitt des Korpus über die Korpusbreite. Bei solchen Korpi mit vergleichsweise geringer maximaler Zugfestigkeit hat sich die erfindungsgemäße Anordnung der Materiallage, welche Dehnungen des Korpus und damit Formungsungenauigkeiten bei der Profilierung vermindert oder weitestgehend verhindert, besonders bewährt, insbesondere in Formschnittverfahren.

Die erfindungsgemäßen Maßnahmen haben sich insbesondere bei einem höhenprofilierten Korpus aus einem Schaumstoffmaterial mit einer Zugfestigkeit von ≤ 300 KPa oder ≤ 200-250 KPa oder insbesondere auch ≤ 150-175 KPa oder ≤ 125 KPa in Anlehnung an DIN EN ISO 1798 besonders bewährt, also bei Materialien nicht besonders hoher bzw. mittlerer oder geringer Festigkeit. Diese Zugfestigkeit ist gemessen an einem Probekörper nach DIN EN ISO 1798 mit einer Höhe im Bereich vom 10 mm bis 15 mm oder der Dichtbandhöhe am Höhenbereich, sofern die Dichtbandhöhe kleiner 10 mm sein sollte (der sich hierdurch gegebenenfalls ergebende Fehler wird vernachlässigt). Gegebenenfalls kann diese Zugfestigkeit in Bezug auf jeden Längsabschnitt des Korpus über die Korpusbreite gelten.

Der höhenprofilierte Korpus kann zusammen mit der Materiallage (gemessen an einem Probekörper nach DIN EN ISO 1798 mit einer Höhe von nicht mehr als 15 mm oder der Dichtbandhöhe am Höhenbereich) eine Zugfestigkeit von ≥ 140-150 KPa oder ≥ 175-200 KPa oder insbesondere auch ≥ 250-300 KPa in Anlehnung an DIN EN ISO 1798 aufweisen, so dass der Korpus mit Materiallage eine relativ hohe Zugfestigkeit aufweist, was sich bei der Formgebung des Korpus vorteilhaft herausgestellt hat. Die Zugfestigkeit kann ≤ 1.000-1.500 KPa oder ≤ 1.750-2.000 KPa betragen, zumeist ≤ 2.500-5.000 KPa aber gegebenenfalls auch höher. In Bezug auf den Probekörper und die Bestimmung dieser Eigenschaft sei auf das Vorherige, insbesondere im vorherigen Absatz, verwiesen. Diese Zugfestigkeit kann gegebenenfalls in Bezug auf jeden Längsabschnitt des Korpus über die Korpusbreite gelten.

Die Reißdehnung, maximale Zugkraft und Zugfestigkeit des Dichtbandabschnittes (Schaumstoffkorpus oder Schaumstoffkorpus mit Materiallage) wird allgemein im Rahmen der Erfindung in Anlehnung an DIN EN ISO 1798:2008-04 bestimmt, an einem Probekörper in Anlehnung an Typ 1. Die Abweichung gegenüber dem Probekörper Typ 1 und der Bestimmung der genannten Werte nach der DIN EN ISO 1798 beruht gegebenenfalls auf einer unterschiedlichen Höhe des Probekörpers, welcher von der Normhöhe 10-15 mm bei dem jeweiligen Dichtband abweichen kann. Die Form des Probekörpers entspricht ansonsten dem Typ 1 Probekörper der DIN EN ISO 1798, so dass der untersuchte Bereich des Korpus allgemein im Rahmen der Erfindung zumindest 6 mm von der Dichtbandseitenfläche beabstandet ist, aufgrund der Kopfenden des Probekörpers. Die maximale Zugkraft entspricht der Höchstkraft der DIN EN ISO 1798. Sofern nichts anderes im Rahmen der Erfindung ausgeführt, wird der Probekörper dem Niederbereich (Höhenprofilbereich des Korpus mit niedrigster Höhe) entnommen. Der Prüfabschnitt des Probekörpers, in welchem der Bruch/Riss bei der Materialprüfung erfolgt, hat allgemein eine Breite von 13mm. Weist der Probekörper aufgrund der Höhenprofilierung keinen rechteckigen Querschnitt auf, wird der Probekörper allgemein im Rahmen der Erfindung aus dem Dichtbandabschnitt derart entnommen, dass die mittlere Höhe des Probekörpers in Bezug auf das Höhenprofil des Korpus minimal ist (sofern auf einen definierten Bereich des Korpus wie den Niederbereich oder den Höhenbereich Bezug nehmend, diesen umfassend). Dies ist in der Regel - und als spezielle Ausführungsform - ein Probekörper angrenzend an eine Seitenfläche des Dichtbandes, sofern der Korpus seine Höhe monoton über die Breitseite ändert (der Messbereich des Probekörpers ist also 6 mm von der Dichtbandseitenfläche beabstandet). Sofern der Probekörperquerschnitt von Bedeutung ist, bspw. bei einer Bestimmung der Zugfestigkeit, so wird der Probekörper wie oben beschrieben mit minimaler mittlerer Höhe erzeugt und dessen tatsächliche Querschnittsfläche als "mittlere Anfangsquerschnittsfläche" angesetzt, also abweichend von der Normhöhe. Es versteht sich, dass sich das Dichtband zur Erzeugung des Probekörpers in vollständig frei entspanntem Zustand (außerhalb der Fuge) befindet. Für die mechanischen Eigenschaften Reißdehnung, maximale Zugkraft und Zugfestigkeit des Korpus (mit und ohne Materiallage) wird derselbe Probekörper bzw. derselbe Dichtbandabschnitt verwendet, der stets in Dichtbandlängsrichtung verläuft. Die hier beschriebenen Abweichungen von der DIN EN ISO 1798 definieren die Bestimmung der jeweiligen physikalischen Größen "in Anlehnung" an die DIN EN ISO 1798.

Gegebenenfalls werden die Angaben im Rahmen der Erfindung wie zu Reißdehnung, maximaler Zugkraft, Zugfestigkeit, Stauchhärte usw. nicht nur für den Niederbereich sondern über die Korpusbreite für jeden Längsabschnitt des Korpus, also für Probekörper in Korpuslängsrichtung, erfüllt, also auch für jeden Längsabschnitt des Höhenbereichs und des Übergangsbereichs zwischen Höhen- und Niederbereich.

Die Zugfestigkeit, Reißdehnung oder andere Eigenschaften des Korpus ohne Materiallage beziehen sich jeweils auf eine Ausführungsform des Korpus, bei welchem die Zugkraft-aufnehmende Materiallage entfernt wurde oder auf einen Korpus aus demselben Schaumstoffmaterial ohne eine solche Materiallage aber mit sonst gleichem Aufbau.

Im speziellen beziehen sich die Angaben zum Schaumstoffkorpus wie Zugfestigkeit, Reißdehnung, Stauchhärte usw. jeweils auf einen einstückigen höhenprofilierten Korpus oder gegebenenfalls einen Korpus mit breitem Basisstreifen (entsprechend der Korpusbreite) und schmalem aufgesetztem separatem Zusatzstreifen.

Die Materialeigenschaften der Materiallage an sich (ohne Schaumstoffkorpus) werden in Dichtbandlängsrichtung bestimmt, vorzugsweise an einem Probekörper mit 50 mm Breite. Die Reißkraft ist nach ERT 20.2-89, die der Reißdehnung (Bruchdehnung) bzw. Reißkraft nach ERT 20.20-89 und das Flächengewicht nach ERT 40.3-90 bestimmt, sofern nichts anderes ausgeführt ist. Ist die Dichtbandbreite kleiner als 50 mm, so wird die Reißkraft oder Reißdehnung an dem Stück der Materiallage gegebener Breite bestimmt und entsprechend der gegebenen Breite auf 50 mm proportional hochgerechnet.

Die erfindungsgemäßen Maßnahmen haben sich bei einer Korpusprofilierung im Formschnittverfahren besonders bewährt, aber auch bei anderen Profilierungen, bspw. bei Aufeinanderanordnung und Befestigung, bspw. Verklebung, von zwei oder mehreren separaten Schaumstoffstreifen übereinander, also in Richtung Breitseite-Breitseite des Dichtbandes.

Durch die genannten Eigenschaften der Materiallage kann die Reißdehnung und maximale Zugkraft bzw. Zugfestigkeit des Dichtbandes vorteilhaft erhöht werden, um den Korpus mit hoher Maßgenauigkeit und Reproduzierbarkeit auch bei großen Längen herstellen zu können.

Durch die Materiallage geringer Reißdehnung und/oder erhöhter maximaler Zugkraft bzw. Zugfestigkeit - jeweils verglichen mit dem Schaumstoffmaterial - wird bei der Herstellung des Dichtbandes somit der Schaumstoffkorpus während der Höhenprofilierung desselben insbesondere in Bezug auf Dehnungen des Bahnabschnitts in Richtungen parallel zu dessen Basis bzw. parallel zur Hauptmittelebene desselben formstabilisiert. Die Profilierung kann hierdurch wesentlich maß- und formgetreuer und reproduzierbarer erfolgen. Es hat sich im Zuge der Erfindung gezeigt, dass derartige Dehnungskräfte bei der Vornahme der Höhenprofilierung insbesondere in einem Formschnittverfahren auftreten können aber gegebenenfalls auch bei Höhenprofilierung eines Basisstreifens durch Aufbringung und Befestigung, bspw. durch Verkleben, eines aufgesetzten separaten weiteren Zusatzstreifens geringerer Breite, wo es auch auf die Maß- und Formgenauigkeit der beiden Schaumstoffstreifen bei deren Verbindung ankommt. So wird im allgemeinen bei einem Formschnittverfahren der Bahnabschnitt durch Formwerkzeuge wie Profilwalzen deformiert, um in dem deformierten Zustand durchtrennt zu werden, beispielsweise unter Durchtrennung des deformierten Bahnbereichs in einer Ebene parallel zur Bahnbreitseite bzw. zur Mittelhauptebene der Bahn in dem gerade der Durchtrennung unterzogenem Bahnbereich in zwei sich ergänzende Bahnabschnitte, einen "oberen" und "unteren", welche beidseitig des Durchtrennwerkzeuges angeordnet sind, so dass hierbei besondere Bedingungen vorliegen. Es hat sich im Zuge der Erfindung herausgestellt, dass durch die Materiallage erhöhter Zugfestigkeit unerwünschte oder nicht-reproduzierbare Dehnungen innerhalb des Bahnabschnitts in einer Richtung parallel dessen Hauptebene deutlich vermindert werden können, so dass das Dichtband mit erhöhter formgetreuer Präzision herstellbar ist. Gegebenenfalls kann dieser Vorteil der Korpusstabilisierung durch die Zugkraft-aufnehmende Materiallage auch bei der weiteren Herstellung und Konfektionierung des Bahnabschnitts bemerkbar machen, beispielsweise wenn die Breite des Bahnabschnitts der Breite mehrerer Dichtbänder entspricht und der Bahnabschnitt in mehrere Dichtbänder separiert wird. Werden bspw. die höhenprofilierten Bahnabschnitte einer Bahn aufgewickelt, um eine Großrolle mit mehrfacher Dichtbandbreite zu ergeben, und die Großrolle in verschiedene, in Rollenlängsrichtung aufeinanderfolgende Scheiben zerschnitten, welche Scheiben dann einzelne Dichtbandrollen darstellen, so kann es aufgrund der Höhenprofilierung des Bahnabschnittes zu lokalen, bspw. seitlichen Verschiebungen von Schaumstoffbereichen benachbarter Wicklungen gegeneinander kommen, so dass bei Separierung der Großrolle in Scheiben sich dann Ungenauigkeiten im Dichtbandprofil ergeben. Gerade auch dem wird durch die erfindungsgemäße Materiallage entgegengewirkt. Auch bei Dichtbändern aus mehreren miteinander dauerhaft verbundenen Schaumstoffstreifen unterschiedlicher Breite wird bei der Dichtbandherstellung das Schaumstoffmaterial Zugkräften und damit ggf. unerwünschten Deformierungen ausgesetzt, welche die Form- und Maßgenauigkeit des resultierenden Dichtbandes beeinträchtigen können, wobei die Zugkraft-aufnehmende Materiallage dem entgegenwirkt.

Zur ausreichenden Stabilisierung des Korpus im Formgebungsverfahren ist also eine geringe Dehnbarkeit (wesentlich geringer als die Schaumstofflage) der Zugkraft-aufnehmenden Materiallage erforderlich, vorzugsweise in Kombination mit einer erhöhten Zugfestigkeit gegenüber dem Schaumstoffkorpus.

Hierdurch können unerwünschte Dehnungen des Korpusmaterials bei der Höhenprofilierung desselben weitestgehend oder praktisch vollständig unterbunden werden und somit höhenprofilierte Dichtbänder auch großer Länge mit hoher Formgenauigkeit hergestellt werden, beispielsweise mit hoher Formgenauigkeit in Bezug auf verschiedene Längsabschnitte eines Dichtbandes oder in Bezug auf verschiedene Dichtbänder innerhalb einer Charge oder auch chargenunabhängig. An die Zugfestigkeit der Materiallage zu hohen Zugfestigkeitswerten sind keine besonderen Beschränkungen gegeben, sofern diese die Handhabung des Dichtbandes nicht beeinträchtigen. Allgemein im Rahmen der Erfindung kann die Zugfestigkeit des Schaumstoffkorpus mit Materiallage aufgrund der Materiallage um den Faktor ≤ 75-100 oder ≤ 40-50 oder ≤ 20-30 höher als die des Korpus ohne Materiallage sein, ohne hierauf beschränkt zu sein, bestimmt an einem Probekörper wie oben beschrieben, insbesondere in Bezug auf die Zugfestigkeit des Schaumstoffmaterials.

Die Zugkraft-aufnehmende Materiallage ist in ihren Eigenschaften, insbesondere Materialeigenschaften, vorzugsweise derart ausgebildet, dass diese eine Konfektionierung des Dichtbandes als rolle oder Wickel ermöglicht, insbesondere eine geeignete Flexibilität bzw. Deformierbarkeit aufweist. Das Dichtband bzw. der Korpus können bei Konfektionierung als Rolle oder Wickel in komprimiertem oder unkomprimiertem Zustand vorliegen.

Vorzugsweise weist das Weichschaumstoffmaterial des Schaumstoffkorpus, insbesondere des höhenprofilierten Bereichs desselben, eine Stauchhärte in Anlehnung an DIN EN ISO 3386 bis zu 3 oder bis zu 5 KPa auf, gegebenenfalls bis zu 7 KPa, insbesondere im Gegensatz zu Hartschäumen, bei welchen die Stauchhärten 30 KPa oder höher betragen können. Bei geringen Stauchhärten hat sich die Erfindung als besonders vorteilhaft erwiesen, anscheinend da hier insbesondere in Formschnittverfahren leicht unerwünschte Verschiebungen von Schaumbereichen bei der Profilierung des Korpus auftreten können. "In Anlehnung" an die Norm heißt, dass sich gegebenenfalls durch die Dichtbandabmessungen Unterschiede in der Probengeometrie zu der DIN EN ISO 3386 ergeben können, die Probe ist so zu entnehmen, dass die Abweichung in der Probengeometrie möglichst gering sind.

Die Kompressibilität (Stauchhärte) etwaiger weiterer Schaumstofflagen des Korpus ist in der Regel nicht mehr als den Faktor 1,25-1,5 oder nicht mehr als den Faktor 2-2,25 oder gegebenenfalls nicht mehr als den Faktor 5-10 verschieden, insbesondere bevorzugt nicht niedriger, als die des höhenprofilierten Korpusbereichs, oder vorzugsweise zumindest ungefähr gleich zu dieser, jeweils bezogen auf den Bereich elastischer Rückstellung des Schaumes. Die Kompressibilität einer weiteren Schaumstofflage kann hierbei jeweils höher sein als die des profilierten Korpus, in bestimmten Anwendungsfällen jeweils auch kleiner.

Vorzugsweise besteht der Schaumstoffkorpus aus einem weichelastischen, rückstellfähigen Material, ggf. sämtliche Teilbereiche des Korpus oder bevorzugt zumindest der die höhenprofilierte Breitseite aufweisende Korpusteil. Insbesondere kann das Material ein PU-Schaum sein, vorzugsweise vollständig PU-Schaum.

Besonders bevorzugt ist der Schaumstoffkorpus einstückig ausgebildet, zumindest im Bereich des Höhenprofils über die gesamte Korpusbreite einstückig ausgebildet, bezogen auf die Erstreckung des Dichtbandes in Richtung Breitseite-Breitseite. Der das höhenprofilierte Schaumstoffkorpus kann auch auf einer weiteren Schaumstofflage (Unterlage) angeordnet sein, welche besonders bevorzugt ebenfalls aus einem weichelastischen, rückstellfähigen Schaumstoffmaterial besteht (nach erster Ausführungsform ist eine solche Zusatzlage also nicht vorgehen). Diese Unterlage kann einen rechteckigen Querschnitt aufweisen, gegebenenfalls ebenfalls einen Querschnitt mit einem Höhenprofil. Die Höhe dieser Unterlage ist in der Regel kleiner als die Höhe des Schaumstoffkorpus, beispielsweise ≤ 40-60%, vorzugsweise ≤ 20-30% oder ≤ 10% der Höhe des Schaumstoffkorpus. Die Unterlage, falls vorgesehen erstreckt sich vorzugsweise über die Breite des Korpus.

Bei dem erfindungsgemäßen Dichtband, insbesondere in einstückiger Ausführung des höhenprofilierten Korpus, kann das Höhenprofil im Bereich der Höhenänderung monoton ansteigen oder insgesamt von einer Schmalseite zu der gegenüberliegenden Schmalseite des Schaumstoffkorpus hin durchgehend monoton ansteigen. Das monoton ansteigende Höhenprofil bedingt zumeist, dass bei der Höhenprofilierung des Korpus dieser entsprechend mit einem Kräfteprofil beaufschlagt wird, welches ebenfalls monoton ansteigend ist. Dementsprechend werden auf Bereiche des Schaumstoffkorpus in dessen Breitenrichtung monoton ansteigende Kräfte ausgeübt. Durch die Zugkraft-aufnehmende Materiallage können diese Kräfte zumindest teilweise oder praktisch vollständig aufgenommen werden, so dass der Schaumstoffkorpus mit erhöhter Formtreue herstellbar ist. Andererseits hat es sich herausgestellt, dass bei bisherigen Dichtbändern unerwünschte Profiländerungen insbesondere bei durchgehend monoton ansteigenden Höhenprofilen ausgebildet werden, insbesondere bei Herstellung des jeweiligen Dichtbandes in einem Formschnittverfahren. Entsprechendes kann gelten, wenn das Höhenprofil im Bereich der Höhenänderung durchgehend streng monoton ansteigend ausgebildet ist, oder das Höhenprofil von einer Schmalseite zu der gegenüber liegenden Schmalseite des Korpus hin durchgehend streng monoton ansteigt. Entsprechendes kann ferner gelten, wenn das Höhenprofil im Bereich der Höhenänderung durchgehend stetig ausgebildet ist oder von Schmalseite zu der gegenüber liegenden Schmalseite des Korpus hin durchgehend stetig ausgebildet ist. Gegebenenfalls kann der Korpus zwischen den Seitenflächen auch Senken oder Erhebungen aufweisen.

Nach einer weiteren bevorzugten Ausführungsform weist der Korpus zur Ausbildung des Höhenprofils zumindest zwei in Bezug auf eine Breitseite übereinander angeordnete und mit einander verbundene separate Schaumstoffstreifen unterschiedlicher Breite auf, insbesondere genau zwei. Der breitere Streifen (Basisstreifen) hat die Breite des Korpus, der aufgesetzte Streifen (Zusatzstreifen) eine geringere Breite. Basis- und/oder Zusatzstreifen können einen rechteckigen Querschnitt aufweisen, ohne hierauf beschränkt zu sein.

Im Allgemeinen entspricht im Rahmen der Erfindung die Dichtbandbreite der Schaumstoffkorpusbreite, gegebenenfalls bis auf eine (zumeist nicht vorgesehene) Seitenflächenbeschichtung oder Umhüllung des Dichtbandes.

Vorzugsweise weist das Höhenprofil des Korpus mindestens einen, insbesondere genau einen, Wendepunkt auf, bzw. allgemein nur einen Höhenversatz unter Ausbildung nur eines Höhenbereichs und nur eines Niederbereichs. Vorzugsweise schließt sich an den Wendepunkt ein konkav gekrümmter Bereich des Höhenprofils und/oder ein konvex gekrümmter Bereich des Höhenprofils an. An den konkav bzw. konvex gekrümmten Bereich des Höhenprofils kann sich ein Bereich gleichbleibender Höhe, also ein horizontales Plateau anschließen, welcher sich bis zu der benachbarten Korpusschmalseite hin erstrecken kann. Gegebenenfalls kann sich eine den konkav oder konvex gekrümmten Bereich des Höhenprofils, welcher dem Wendepunkt benachbart angeordnet ist, ein Bereich gegensinniger Krümmung anschließen. Gegebenenfalls kann das Höhenprofil auch mehrere Wendepunkte aufweisen.

Vorzugsweise ist der (genau) eine Wendepunkt bzw. Höhenversatz im mittleren Bereich des Korpus angeordnet, vorzugsweise im Bereich von ± 20% oder ± 15% oder besonders bevorzugt ± 10% jeweils der Korpusbreite um die Korpusmittellinie, welche auf Höhe der halben Korpusbreite liegt. Das Höhenprofil des Korpus kann anschließend an den Bereich mit Höhenänderung sich zu einer oder zu beiden Schmalseiten hin angrenzende plateauförmige Bereiche gleichbleibender Höhe aufweisen. Hierdurch weist das Dichtband im Bereich einer oder beider der Schmalseiten in Einbausituation in einer Fuge mit planparallelen Fugenwandungen, wie sie zumindest annähernd in der Praxis häufig auftreten, Bereiche gleichbleibender Kompression und damit auch gleichbleibendem Wasserdampfdiffusionswiderstand auf, so dass sich der Dichtbandbereich mit änderndem Höhenprofil und damit auch änderndem Wasserdampfdiffusionswiderstand auf einen mittleren Korpusbereich bezieht bzw. beschränkt. Hierdurch ist auch der Bereich des Schaumstoffkorpus, welcher in einem Formschnittverfahren sich ändernden Dehnungskräften ausgesetzt ist, beabstandet von den Seitenflächen bzw. im mittleren Dichtbandbereich angeordnet.

Bevorzugt sind der Höhenbereich und/oder der Niederbereich des Höhenprofils jeweils an einer Dichtbandschmalseite angeordnet; Höhenbereich und/oder der Niederbereich können gegebenenfalls auch von der jeweils benachbarten Schmalseite vorzugsweise nur geringfügig beabstandet sein, bspw. unabhängig voneinander um jeweils ≤ 5-10 % oder ≤ 15-20 % oder oder ≤ 30-45 % der Korpusbreite.

Gegebenenfalls kann zwischen Höhen- und Niederbereich eine Senke oder Erhebung im Profil des Schaumstoffmaterials vorgesehen sein, vorzugsweise ist dies nicht der Fall.

Der Höhenbereich kann sich, vorzugsweise angrenzend an die benachbarte Dichtbandschmalseite angeordnet, über ≥ 10-15% oder über ≥ 20-25% der Korpusbreite erstrecken, insbesondere ≥ 30-35% derselben, bspw. ca. 45%, gegebenenfalls über ≤ 35-40% oder ≤ 45% bis 50% der Korpusbreite, oder ≤ 60% bei nur schmalem Niederbereich. Hierdurch ist der Übergangsbereich zwischen Höhen- und Niederbereich vergleichsweise schmal und eine Höhenprofilierung kritisch vorzunehmen und mit beträchtlichen Kräften, insbesondere Dehnkräften auf das Schaumstoffmaterial verbunden, wobei sich die erfindungsgemäße Ausbildung des Dichtbandes besonders bewährt hat. In diesem Zusammenhang sei von dem Höhenbereich auch ein "erweiterter Höhenbereich" umfasst, im Sinne eines Korpusbereichs, welcher auch ggf. in der Höhe um bis 10-15% der Korpushöhe von der Maximalhöhe des Korpus abweichen kann. Dies gilt für jeden oben Werte der möglichen Breite des Höhenbereichs.

Der Niederbereich kann sich, vorzugsweise angrenzend an die benachbarte Dichtbandschmalseite angeordnet, über ≥ 10-15% oder über ≥ 20-25% der Korpusbreite erstrecken, insbesondere ≥ 30-35% derselben, bspw. ca. 45%, gegebenenfalls über ≤ 35-40% oder ≤ 45% bis 50% der Korpusbreite, oder ≤ 60% bei nur schmalem Höhenbereich. Hierdurch ist der Übergangsbereich zwischen Höhen- und Niederbereich vergleichsweise schmal, auf das obige sei verwiesen. In diesem Zusammenhang sei von dem Niederbereich auch ein "erweiterter Niederbereich" umfasst, im Sinne eines Korpusbereichs, welcher auch ggf. in der Höhe um bis 10-15% der Korpushöhe von der Minimalhöhe des Korpus abweichen kann. Dies gilt für jeden oben Werte der möglichen Breite des Niederbereichs.

Der Höhenbereich bzw. erweiterte Höhenbereich kann eine Breite von ≥ 13 mm oder vorzugsweise ≥ 25 mm aufweisen. Der Niederbereich bzw. erweiterte Niederbereich kann eine Breite von ≥ 13 mm oder vorzugsweise ≥ 25 mm aufweisen.

Der Übergangsbereich zwischen Höhen- und Niederbereich kann sich über nur ≤ 40-50% oder ≤ 20-30% oder gar ≤ 10% der Korpusbreite erstrecken, wobei durch die erfindungsgemäßen Maßnahmen das Dichtband mit hoher Genauigkeit und Reproduzierbarkeit herstellbar ist, trotz der damit ggf. verbundenen hohen Dehnkräfte. Der Übergangsbereich zwischen erweitertem Höhenbereich und erweitertem Niederbereich kann sich über nur ≤ 40-50% oder ≤ 20-30% oder gar ≤ 10% der Korpusbreite erstrecken, wobei sich dies unabhängig voneinander auf den erweiterten Höhen- oder Niederbereich mit Abweichung von 10% der Korpushöhe in der jeweiligen Richtung oder auf 15% Abweichung von der maximale bzw. minimalen Korpushöhe beziehen kann. Hierdurch, insbesondere in Kombination mit den anderen Angaben zur Korpusgeometrie, kann also ein scharfer Übergang zwischen Höhen- und Niederbereich erzeugt werden, was für bestimmte Anwendungsfälle, insbesondere bei der Herstellung von Verbundplatten, besonders erwünscht ist.

Das erfindungsgemäße Dichtband kann im vollständig frei expandierten Zustand einen Höhenunterschied zwischen dem Höhenbereich und dem Niederbereich des Schaumstoffkorpus aufweisen, welcher ≥ 20-25% der Korpushöhe beträgt oder besonders bevorzugt ≥ 30-35%, derselben, der Höhenunterschied kann ≤ 75-80% oder ≤ 65-70% der Korpushöhe betragen, beispielsweise ca. 50%. Der Niederbereich kann eine Höhe von 25-75% oder 30-70% oder 40-60% des Höhenbereichs aufweisen. Zur Erzielung einer derartigen Profilierung, insbesondere durch ein Formschnittverfahren, sind auf den jeweiligen Bereich des Korpusrohlings, z.B. einer Schaumstoffbahn, deutliche Deformationskräfte auszuüben, welche auch eine die Dehnung der Dichtbandbreitseite bewirken, so dass bei herkömmlichen Verfahren signifikante oder beträchtliche Abweichungen des Dichtbandhöhenprofils von dem Sollprofil auftreten können. Dies wird durch die erfindungsgemäße Ausgestaltung des Dichtbandes zumindest deutlich verringert, insbesondere bei Dichtbändern vergleichsweise geringer Höhe.

Das Schaumstoffkorpus kann im freien, druckunbeaufschlagten (vollständig expandierten) Zustand eine Höhe von ≤ 20-25 mm oder ≤ 12-15 mm oder ≤ 10 mm aufweisen, bspw. ≥ 4-6 mm. Diese Werte können sich auch auf das Dichtband im freien, vollständig expandierten Zustand beziehen. Bei derart vergleichsweise geringen Höhen, bei welchen eine gleichmäßige Profilierung besonders schwierig ist, haben sich die erfindungsgemäßen Maßnahmen besonders bewährt. Gegebenenfalls kann die Höhe aber auch bis zu 30-40mm oder bis zu 50-65mm oder darüber hinaus betragen.

Das weichelastische, rückstellfähige Schaumstoffmaterial des Korpus, insbesondere des höhenprofilierten Bereichs desselben (jeweils ohne etwaige Imprägnierung, insbesondere ohne Imprägnierung zur verzögerten Rückstellung) kann nach Kompression auf 20% dessen Ausgangshöhe, Verweilzeit von einer Stunde in diesem Kompressionszustand und nachfolgender Rückstellfreigabe - also vollständiger Druckentlastung - eine Rückstellung bis auf zumindest 85% dessen Ausgangshöhe eine Zeitdauer von ≤ 4 - 5 h, vorzugsweises ≤ 1 - 2 h auf, in der Regel ≤ 0,5 oder ≤ 1/4 h, beispielsweise ≤ 5 - 10 min oder ≤ 1 - 2 min aufweisen. Das Schaumstoffmaterial des Korpus kann insbesondere bei einer Druckausübung von ≤ 5 - 10 kg oder ≤ 1,5 - 3 kg auf eine Fläche von 10cm² auf 20% dessen Ausgangshöhe komprimierbar sein, wobei das Dichtband über dessen gesamte Breitseitenfläche mit einer derartigen Druckkraft beaufschlagt wird. Dies kann sich jeweils auf sämtliche Bereiche des Korpus beziehen.

Die Zugkraft-aufnehmende Materiallage kann insbesondere ein Flächengebilde darstellen, bspw. mit einer Lagenhöhe von ≤ 1-2 mm oder ≤ 0,25-0,5 mm oder ≤ 0,05-0,1 mm, ohne hierauf beschränkt zu sein. Das Flächengebilde weist vorzugsweise keine Höhenprofilierung auf, ist also eine platte Materiallage.

Die Zugkraft-aufnehmende Materiallage kann insbesondere aus einem organischen Material wie einem Kunststoffmaterial und/oder einen anorganischen, vorzugsweise nicht-metallischem, Material wie Glasfasermaterial bestehen oder eine solche Materiallage aufweisen. Ist die Zugkraft-aufnehmende Materiallage eine Verbundmateriallage, so ist stellt obige Lage aus organischem und/oder anorganischem, vorzugsweise nicht-metallischem, Material vorzugsweise die Lage des Verbundes dar, welche die Reißdehnung und/oder Zugkraft bzw. Zugfestigkeit des Verbundes wesentlich bestimmt, bspw. mehr als 50-75% der Verbundlagendicke ausmacht.

Die Zugkraft-aufnehmende Materiallage kann insbesondere als Textillage oder Folie ausgebildet sein. Die Textillage kann als Gewebe, Gewirk, Vlies (bspw. aus Kunststoff oder Glasfasern), Folie (bspw. Kunststofffolie oder ggf. Metallfolie) oder dergleichen ausgebildet sein, sie kann auch ein Verbundmaterial darstellen, vorzugsweise ein solches ohne Schaumstofflage, besonders bevorzugt mit einer oder mehrerer Schichten von Gewebe, Gewirk, Vlies oder Textillage und/oder Folie (bspw. Metall- oder Kunststofffolie), einschließlich metallisierte Kunststofffolie oder anderen geeigneten Materialien. Besteht die Materiallage oder eine Schicht derselben aus Fasern, so sind diese vorzugsweise miteinander zugkraft-aufnehmend verhaftet, bspw. durch thermische Verhaftung (z.B. in Form von Punktschweißen) oder durch stoffschlüssige Verbindung, insbesondere bei Textil- oder im speziellen Vlieslagen. Die Materiallage kann bspw. durch einen Kleber mit dem Schaumstoffkorpus verbunden sein, bspw. einen an Atmosphäre wir durch Einwirkung von Luft und/oder Feuchtigkeit abbindenden Kleber, einen thermoplastischen Hotmelt-Kleber oder dergleichen, was jeweils insbesondere in Kombination mit einem Textilmaterial wie Gewebe, Gewirk oder Vlies, insbesondere Vlies, gelten kann, da der der Kleber dieses zumindest teilweise durchdringen kann, wodurch die Verbindung mit dem Schaumstoffkorpus verbessert ist und somit auch höheren Zugkräften standhalten kann. Insbesondere haben sich Hotmelt-Kleber als vorteilhaft erwiesen. Insbesondere hat sich die Kombination Vlies und Hotmeltkleber als vorteilhaft herausgestellt. Wird eine Folie oder eine andere glatte, durchgehende Schicht als Materiallage eingesetzt, so wird diese mit einem Primer eingesetzt oder weist an der dem Schaumstoffkorpus zugewandten Seite vorzugsweise eine Fasermaterialkaschierung auf, z.B. in Form eines Gewebes, Gewirkes, Vlieses oder anderen textilen Materials, um eine bessere Verbindung mit dem abzudichtenden Bauteil zu ergeben, wenn eine bessere bzw. dichtere stoffschlüssige Verbindung mit diesem eingegangen wird, z.B. wenn das Bauteil bei dessen Herstellung mit dem Dichtband verklebt wird. Die Verklebung kann durch Anschäumen des Bauteilwerkstoffes an das Dichtband erfolgen, wie dies z.B. bei der Herstellung von Verbundplatten oftmals erfolgt.

Die Zugkraft-aufnehmende Materiallage ist vorzugsweise stoffschlüssig, z.B. durch eine Klebeschicht (ggf. einschließlich Selbstklebeschicht) an dem Schaumstoffkorpus haftend und Zugkraft aufnehmend festgelegt, insbesondere durch unmittelbare Stoffschlussverbindung mit jeweiligen Material des Bauteils, bspw. durch Kontaktieren desselben mit dem Dichtband in noch nicht abgebundenem Zustand des Bauteilmaterials, insbesondere durch Anschäumen desselben an das Dichtband. Die Materiallage kann ggf. auch einen Teil einer derartigen Klebelage darstellen. Die Zugkraft-aufnehmende Materiallage kann auch selber eine Klebeschicht darstellen, also eine Schicht eines Klebemittels, welche eine geeignete Zugfestigkeit aufweist, ggf. nach einem Aushärtungs- oder Abbindevorgang.

Die Breite der Zugkraft-aufnehmenden Materiallage kann der Korpusbreite entsprechen, vorzugsweise zumindest ≥ 65-75% oder ≥ 85-95% derselben. Hierbei können bereits Querkräfte auf den Schaumstoffkorpus bei der Herstellung des Dichtbandes in großem Umfang aufgenommen werden, unabhängig davon, ob das Dichtband in seiner gegebenen Breite profiliert wird oder ob - bevorzugt - ein Bahnabschnitt mit einem Vielfachen der Dichtbandbreite höhenprofiliert wird, wobei der Bahnabschnitt dann in mehrere Dichtbänder separiert wird. Besonders bevorzugt erstreckt sich die Zugkraft-aufnehmende Materiallage über die gesamte Breite des Schaumstoffkorpus bzw. die gesamte Dichtbandbreite, da einerseits dann Querkräfte bei der Herstellung des Dichtbandes, insbesondere während des Vorgangs der Höhenprofilierung desselben, weitestmöglich aufgenommen werden können, zum anderen ist das Dichtband einfach herstellbar. Die Korpusbreite entspricht der Breite des Basisstreifens bei mit Zusatzstreifen höhenprofiliertem Korpus.

Im Allgemeinen im Rahmen der Erfindung ist die Zugkraft-aufnehmende Materiallage mit einer größeren Festigkeit bzw. Klebkraft an dem Schaumstoffkorpus oder allgemein in dem jeweiligen Dichtbandbereich festgelegt, als die Festigkeit des Schaumstoffkorpus bzw. eine Zwischenlage zwischen Materiallage und Schaumstoffkorpus. Bei Zugkrafteinwirkung, beispielsweise auch bei einem Abzieh- oder Abschälvorgang, wird somit die Reißzone im Bereich des Schaumstoffkorpus bzw. der Zwischenlage liegen, nicht jedoch die Verbindung zwischen Materiallage und Klebeschicht oder Klebeschicht und Schaumstoffkorpus bzw. Zwischenlage gelöst bzw. zerstört werden.

Besonders bevorzugt ist der Schaumstoffkorpus einteilig ausgebildet und somit die Zugkraft-aufnehmende Materiallage unmittelbar an dem mit dem Höhenprofil versehenen Schaumstoffbereich Zugkraft-aufnehmend festgelegt. Weist der Korpus zwei Schaumstoffstreifen unterschiedlicher Breite auf, welche das Höhenprofil ausbilden, so ist die Zugkraft-aufnehmende Materiallage vorzugsweise unmittelbar an dem breiteren der beiden Schaumstoffstreifen (Basisstreifen) festgelegt. "Festgelegt" heißt hier Zugkraft-aufnehmend und vorzugsweise dauerhaft, also nur zerstörend lösbar, festgelegt. Gegebenenfalls kann auch eine Zwischenlage zwischen Materiallage und Schaumstoffkorpus (bzw. zwischen Materiallage und Basisstreifen) vorgesehen sein, insbesondere in Form einer Schaumstoff-Zwischenlage, wobei diese Zwischenlage vorzugsweise kein Höhenprofil aufweist, also beispielsweise einen rechteckigen Querschnitt, gegebenenfalls jedoch zusätzlich ein Höhenprofil aufweisen kann. Unter Berücksichtigung der Zwischenlage weist der Schaumstoffkorpus somit mehrere übereinander angeordnete Schaumstofflagen auf. Gegebenenfalls ist es hierbei auch möglich, dass lediglich eine Schaumstoff-Zwischenlage profiliert ist, an deren Unterseite die Zugkraft-aufnehmende Materiallage angeordnet ist (gegebenenfalls unter Zwischenanordnung einer weiteren Zwischenlage, insbesondere weiteren Schaumstoffzwischenlage, wobei die höhenprofilierte Zwischenlage von einer anderen Lage, gegebenenfalls Schaumstofflage, überdeckt ist, welche eine gleichbleibende Höhe aufweisen kann. Der Begriff "Lage", sei hierbei generell im Rahmen der Erfindung als eine separate Lage, also ein bei der Herstellung des Dichtbandes als separat handhabbares Bauteil ausgebildete Materiallage verstanden.

Weist der Schaumstoffkorpus mehrere Schaumstofflagen auf, so kann die Zugkraft-aufnehmende Materiallage zwischen den zwei oder mehreren Schaumstofflagen angeordnet sein.

Die Zugkraft-aufnehmende Materiallage ist vorzugsweise lappig oder nicht biegesteif eingestellt, z.B. nicht biegesteif bei 20 cm freien horizontalem Überstand über ein Einspannende derselben, bei horizontaler Anordnung des eingespannten Endes der Materiallage, so dass also das freie Ende der Materiallage durch das Eigengewicht unter das Einspannende abbiegt. Das Abbiegen unter die Horizontale kann um ≥ 3-5 mm oder ≥ 1-2 cm betragen, bspw. auch ≥ 3-5 cm oder praktisch über die Überstandlänge. Die Angaben beziehen sich auf die Materiallage in der Breite, wie sie an dem Dichtband vorliegt.

Das Schaumstoffmaterial des Korpus mit Höhenprofilierung (ohne Imprägnierung des Schaumstoffes) kann eine Luftdurchlässigkeit im Bereich von 10 - 1000 l/m²s oder 25 - 1000 l/m²s oder auch 40 - 800 l/m²/s aufweisen, oder auch im Bereich 40 - 600 l/m²s oder 40 - 400 l/m²s, bspw. 100 - 600 l/m²s oder 100 - 400 l/m²s. Allgemein im Rahmen der Erfindung bezieht sich die jeweils angegebene Luftdurchlässigkeit auf die Normbedingungen eines 10 mm dicken Schaumstückes (vollständig entspannt) bei einem Mess-Unterdruck von 0,5 mbar, Prüffläche 100cm²; Frank-Gerät 21443; DIN EN ISO 9237.

Das erfindungsgemäße Dichtband weist vorzugsweise über seine gesamte Länge einen gleichbleibenden Querschnitt bzw. Korpusquerschnitt auf.

Der Schaumstoff des höhenprofilierten Korpus der erfindungsgemäßen Dichtbandes kann insbesondere nicht imprägniert sein, es kann unter Umständen auch eine Imprägnierung vorliegen, z.B. zur Einstellung der Wasserdampfdiffusionswiderstandes des Dichtbandes, Imprägnierung mit einem Brandschutzmittel oder für andere Zwecke. Bei Korpus aus Basis- und Zusatzschaumstoffstreifen können Basisstreifen und/oder Zusatzstreifen nicht imprägniert bzw. nicht rückstellverzögernd imprägniert sein.

Das erfindungsgemäße Dichtband kann als Rolle oder Wickel konfektioniert vorliegen, bspw. mit einer durchgehenden Dichtbandlänge von ≥ 100-200 m.

Weiterhin von der Erfindung umfasst ist ein Verfahren zur Herstellung eines erfindungsgemäßen Dichtbandes, wobei eine Schaumstoffbahn mit einer gegebenen Zugfestigkeit bereitgestellt wird, sowie eine Zugkraft-aufnehmende Materiallage mit einer gegenüber der Schaumstoffbahn verminderten Reißdehnung, so dass die Materiallage gegenüber dem Korpus als Dehnbremse bei Zugkraftausübung in Korpuslängsrichtung wirkt. Die Materiallage wird an einer Breitseite der Schaumstoffbahn Zugkraft-aufnehmend befestigt, beispielsweise durch Verklebung, und mit einer zwischen den beiden Bahnbreitseiten angeordneten Hauptmittelebene der Bahn. Die Bahn wird in Längszonen wechselseitig derart verformt, dass in Bezug auf die Hauptmittelebene der Schaumstoffbahn Volumenbereiche des Schaumstoffmaterials von einer Seite der Mittelhauptebene der Bahn zu der anderen Seite der Hauptmittelebene verschoben werden, anschließende Durchtrennung der Bahn in Längsrichtung entlang einer parallel zu der Mittelhauptebene der Bahn angeordneten Trennebene unter Ausbildung zweier Bahnabschnitte geringerer Höhe als die der Bahn und gegebenenfalls anschließende Zerteilung der beiden Bahnabschnitte in Längsabschnitte unter Ausbildung einer Mehrzahl von Dichtbändern.

Insbesondere können hierbei an beiden gegenüberliegenden Breitseiten der Schaumstoffbahn jeweils eine Zugkraft-aufnehmende Materiallage Zugkraft aufnehmend befestigt werden. Hierdurch kann eine Schaumstoffbahn, deren Breite ein Vielfaches der Dichtbandbreite aufweist, an beiden Breitseiten durch geeignete Verformungswerkzeuge, beispielsweise Profilwalzen, deformiert werden, so dass unter Durchtrennung der Dichtbahn in der Dichtbahnhauptmittelebene bzw. einer zu dieser parallelen Ebene zwei Dichtband Bahnabschnitte mit Höhenprofil erhalten werden.

In Bezug auf die übrigen Ausführungen zur Ausgestaltung des Dichtbandes, insbesondere von Schaumstoffkorpus und Materiallage, sei ausdrücklich Bezug genommen.

Die Erfindung umfasst ferner eine Verbundplatte mit erfindungsgemäßem Dichtband.

Die Verbundplatte kann im Verbund mit weiteren baugleichen Verbundplatten in einer Plattenebene zur Erstellung einer Wand, Wandfüllung oder Wandabdeckung bzw. eines Daches oder einer Dachabdeckung verwendet werden oder eingesetzt sein. Die Verbundplatte kann an zumindest zwei einander gegenüberliegenden Rändern zueinander komplementäre Verbindungsmittel zur Verbindung mit benachbarten Verbundplatten aufweisen und mit denselben jeweils unter Ausbildung eines Spaltes verbunden sein, vorzugsweise bei Anwesenheit einer gegen Luft und/oder Feuchtigkeit dichtenden Labyrinthdichtung, wobei zur Abdichtung des Spaltes zumindest an einem Rand der Verbundplatte ein Dichtungsband lagefixiert angeordnet ist. Bei einem Verbund aus Verbundplatten der eingangs genannten Art liegen gleiche Verbundplatten randseitig über den Dichtungsstreifen an. Zur Verbesserung einer Luftdichtigkeit kann der Spalt durch die Seitenwand nach außen hin abgeschirmt werden. Die Seitenwand wird beispielsweise durch einen Vorsprung gebildet, der sich von der Verbundplatte in Verbundrichtung von dem Rand weg erstreckt und die benachbarte Verbundplatte unter Abdeckung des Spaltes außenseitig übergreift. Die Abdeckung des Spaltes nach außen erfolgt in der Regel an beiden Außenseiten der Verbundplatte.

Das Dichtungsband erstreckt sich vorzugsweise über praktisch die gesamte Fugentiefe, so dass die Fuge besonders bevorzugt nur durch das genannte Dichtungsband praktisch vollständig abgedichtet wird.

Die Verbundplatte kann einen Schaumstoffkern aufweisen, bspw. als Hartschaum. Der Schaum kann ein PU-Schaum sein. Die Verbundplatte kann an einer oder beiden Großflächen eine steife Außenhaut bspw. aus Metall aufweisen.

Zur Festlegung des Dichtungsbandes mit den Dichtungsstreifen kann der zugeordnete Rand der Verbundplatte eine klebrige Kontaktfläche zur Anbringung bzw. Anlage des Dichtungsbandes aufweisen. Zur kontinuierlichen Herstellung der Verbundplatte kann eine zweischalige Außenhaut vorgesehen sein, wobei bei der Herstellung zwischen beiden Außenhäuten frischer (nicht ausgehärteter) Schaum, insbesondere Hartschaum, angeordnet wird. Beim Aushärten des Schaumes wird dieser flächig mit dem Dichtband kontaktiert (zu diesem Zeitpunkt kann der Verbundplattenschaum noch aufschäumend sein), wobei das Dichtband in seine Sollposition an der Verbundplatte gebracht wird. Das Dichtband kann hierbei seitlich an die entstehende Verbundplatte herangeführt werden. Unter Aushärtung des Schaumes verbindet sich dieser stoffschlüssig mit dem Dichtband. Die Zugkraft-aufnehmende Materiallage des Dichtbandes ist hierbei vorzugsweise mit dem Verbundplatten-Schaumstoffmaterial kontaktiert. Eine etwaige Textilschicht oder Fasermaterialschicht wie Vliesschicht der Materiallage wird vorzugsweise mit dem aushärtenden Verbundplattenschaum kontaktiert, um eine innige und zugfeste, abschälwiderstandsfähige Verbindung mit diesem einzugehen, die auch nach Aushärten des Schaums weiter besteht.

Die Verbundplatte kann über eine Steckverbindung, wie Nut-Feder-Verbindung, mit der benachbarten Verbundplatte verbindbar sein. Hierbei kann die Nut ein U-Profil mit zwei außenseitig an der Verbundplatte angeordneten Schenkeln aufweisen, die bei den verbundenen Verbundplatten unter Ausbildung des Labyrinths den Spalt außen beidseitig überdecken. Vorteilhaft können in der Feder zur Nut hin geöffnete Schlitze vorgesehen sein, die es ermöglichen, dass die Feder unter partieller Schließung der Schlitze in die Nut passgenau leicht eingeklemmt wird, so dass die Spaltbreite an den Schenkeln zumindest abschnittweise gegen Null geht. Dies kann den Fugendurchlasskoeffizient a vorteilhaft verkleinern.

Das Dichtungsband kann zweckmäßig in der Nut vormontiert angeordnet sein. Diese kann einen Nutengrund aufweisen, an dem das Dichtungsband vorzugsweise unter Anpassung an das Profil des Nutengrundes festgelegt sein kann, bspw. durch Anschäumen des Plattenschaumstoffes. Die Nut kann beispielsweise ein Profil mit vorzugsweise geraden Seitenkanten, wie ein V-förmiges, U-förmiges oder Z-förmiges Profil, aufweisen. Die einander gegenüberliegenden und zueinander komplementären Ränder der Verbundplatte können jeweils auch ein L-förmiges Profil mit einem sich zumindest in etwa in Plattenebene wegerstreckenden Vorsprung zur außenseitlichen Überdeckung des Spaltes in Verbindungslage der Verbundplatte mit einer dem Rand jeweils zugeordneten Verbundplatte aufweisen, oder ein anderes geeignetes Profil.

Vorzugsweise weisen die Randprofile der Verbundplatten jeweils einen zumindest etwa senkrecht zur Verbundplattenhauptebene angeordneten mittleren Abschnitt zur Festlegung des Dichtungsbandes auf.

Im Montagezustand, also bei zusammengesteckten Verbundplatten, kann das Dichtungsband auf 15-75 % seiner Ausgangshöhe bei vollständig frei entspanntem Zustand zusammengedrückt sein, vorzugsweise auf 35-65% seiner Ausgangshöhe, was insbesondere bei Montage an Verbundplatten gelten kann, ansonsten auch auf ≤ 40-50 der Ausgangshöhe.

Die Verbundplatten können eine Höhe von ≥ 4-6 m oder ≥ 8-10 m aufweisen, bspw. bis 10-15 m oder darüber hinaus. Das Dichtungsband erstreckt sich hierbei und allgemein im Rahmen der Erfindung durchgehend über praktisch die gesamte Höhe der Verbundplatten (ggf. bis auf etwaige Anschlussbereiche, die in der Regel ≤ 2-5% oder ≤ 0,5-1% der Höhe der Verbundplatte ausmachen. Aufgrund der großen Höhe sind besondere Anforderungen an die Maßgenauigkeit des Dichtbandes zu stellen, auch zur Erzielung einer gleichmäßigen Dichtigkeit, was durch das erfindungsgemäße Dichtband in besonderem Maße erfüllt wird.

Die zur Erzeugung des Wandaufbaus miteinander verbundenen bzw. zusammengesteckten Verbundplatten sind vorzugsweise miteinander baugleich. Vorzugsweise ist der Wandaufbau Teil einer Gebäudeaußenwand oder Gebäudedach, aber nicht hierauf beschränkt.

Sämtliche in Bezug auf diese Erfindung genannten technischen Normen wie DIN-Normen beziehen sich jeweils auf die vor dem Prioritätstag zu dieser Anmeldung (dem 26. März 2013) zuletzt gültigen Fassung.

Die Erfindung wird beispielhaft anhand der nachfolgenden Figuren erläutert und beschrieben. Es zeigen:
- Fig. 1-3: :: Drei Ausführungsformen erfindungsgemäßer Dichtbänder im Querschnitt,
- Fig. 4: :: eine schematische Darstellung eines Dichtbandes nach Fig. 1-3 in Einbausituation in einer Fuge,
- Fig. 5: :: eine schematische Darstellung eines Dichtbandes bei Bearbeitung in einem Formschnittverfahren,
- Fig. 6: :: eine weitere Ausführungsform eines erfindungsgemäßen Dichtbandes

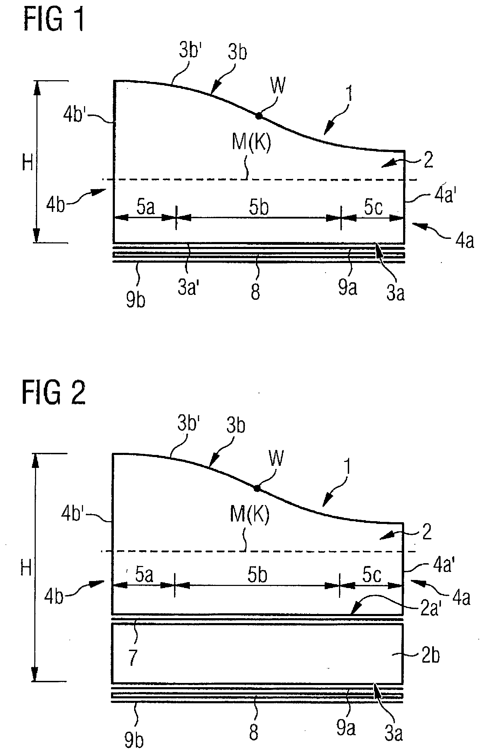

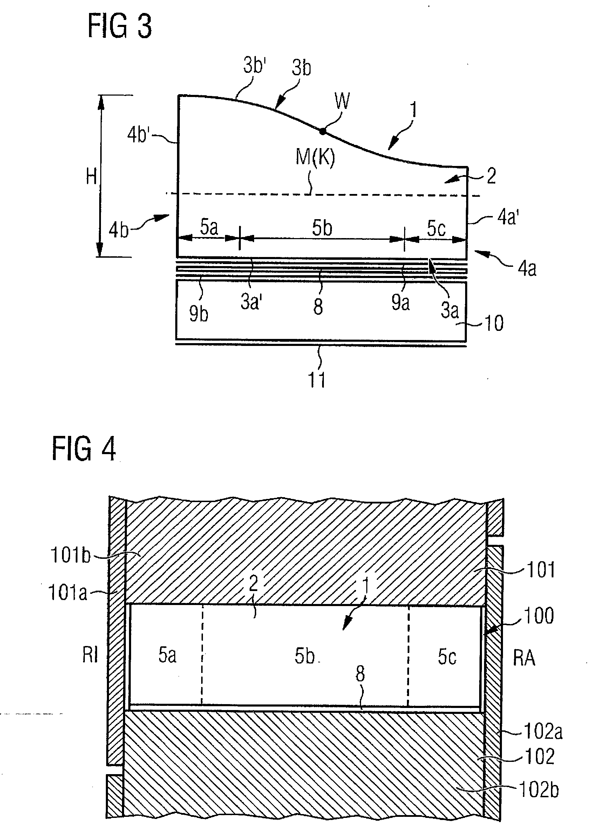

Figur 1 zeigt ein erfindungsgemäßes Schaumstoff-Dichtband 1 mit einem Schaumstoffkorpus 2 in vollständig frei expandiertem Zustand zur Abdichtung einer Fuge 100 (Figur 4) zwischen benachbarten Bauteilen 101 und 102. Das Dichtband 1 bzw. der Schaumstoffkorpus 2 weisen jeweils zwei gegenüberliegende Breitseiten 3a, 3b bzw. 3a', 3b' auf, wobei die beiden Dichtbandbreitseiten an zwei gegenüberliegende Kontaktflächen der beiden Bauteile 101, 102 unter Abdichtung der Fuge anlegbar sind. Das Dichtband 1 bzw. der Korpus 2 weisen jeweils ferner zwei die Breitseiten 3a, 3b bzw. 3a', 3b' verbindendende Schmalseiten 4a, 4b bzw. 4a', 4b' auf. Die Breitseite 3a des Dichtbandes 2 bildet hierbei eine Basis des Schaumstoffkorpus, vorzugsweise eine ebene Basis, wobei die Basis senkrecht zu den beiden Schmalseiten 4a, 4b angeordnet sein kann. Entsprechendes gilt für den Korpus. An der anderen Breitseite ist ein Höhenprofil mit einem Höhenbereich 5a, einem Niederbereich 5c sowie einem Übergangsbereich 5b zwischen diesen ausgebildet, was sich hier auch auf den Korpus bezieht.

Der Schaumstoffkorpus 2 besteht aus einem rückstellfähigen Weichschaumstoffmaterial, welches bspw. zur verzögerten Rückstellung oder zu anderem Zweck imprägniert sein kann, nach dem Beispiel und allgemein im Rahmen der Erfindung aber auch ohne verzögernde Rückstellimprägnierung oder ohne jegliche Imprägnierung ausgerüstet sein kann. Der höhenprofilierte Korpus ist hier einstückig ausgebildet. Das Höhenprofil ist über die Korpusbreite monoton und stetig.

In Einbaulage kann das Dichtband 1 wie in Figur 4 dargestellt derart angeordnet sein, dass der Höhenbereich 5a rauminnenseitig (RI) und der Niederbereich 5c raumaußenseitig (RA) angeordnet ist, so dass sich aufgrund der komprimierten Anordnung des Dichtbandes in der Fuge im Bereich größerer Materialanhäufung (Höhenbereich 5a) eine erhöhte Materialdichte und damit ein Gefälle des Wasserdampfdiffusionswiderstandes von der Rauminnenseite zur Raumaußenseite hin ergibt. Hierbei ist das Dichtband in der Fuge auf ca. 15-75% seiner Ausgangshöhe H in vollständig frei expandiertem Zustand gemäß Figur 1 komprimiert, vorzugsweise auf ca. 30 - 60%, was allgemein im Rahmen der Erfindung gelten kann.

Um das Dichtband insbesondere in einem Formschnittverfahren besonders maßhaltig und formgetreu mit gleichbleibendem Höhenprofil über die Dichtbandlänge und besonders reproduzierbar innerhalb einer Charge oder in verschiedenen Chargen herstellen zu können, ist an der Basis des Schaumstoffkorpus 2 eine Zugkraft-aufnehmende Materiallage 8 mit gegenüber dem Schaumstoffkorpus verminderter Reißdehnung dauerhalt befestigt, bspw. durch Schmelzkleber. Der Schaumstoffkorpus mit Zugkraft-aufnehmender Materiallage weist eine Reißdehnung von ≤ 25% auf. Die Reißdehnung des Schaumstoffkorpus durch die Zugkraft-aufnehmende Materiallage wird um mehr als 85% bezogen auf die Reißdehnung des Korpus ohne Zugkraft-aufnehmende Materiallage verringert.

Zu den Ausführungsbeispielen bezieht sich die Reißdehnung und ferner Angaben zur (maximalen) Zugkraft oder Zugfestigkeit des Korpus (mit oder ohne Zugkraft-aufnehmende Materiallage) jeweils auf einen Längsabschnitt(Prüfabschnitt) einer Breite von 13mm, also den Bereich des Probekörpers, in welchem der Bruch bzw. die Durchreißstelle liegt. Der Probekörper ist in Anlehnung an DIN EN ISO 1798 als Typ 1 Probekörper ausgebildet, mit verbreiterten Endbereichen.

Das Schaumstoffmaterial des Schaumstoffkorpus weist eine Zugfestigkeit von ca. 100 KPa auf. Der Schaumstoffkorpus mit Zugkraft-aufnehmender Materiallage weist eine Reißdehnung von ≤ 25% nach DIN EN ISO 1798 auf, ohne die Zugkraft-aufnehmende Materiallage eine Reißdehnung von ca. 200% nach DIN EN ISO 1798. Bei der Höhe des Niederbereichs des Korpus von ca. 8 mm weist der Schaumstoffkorpus ohne Zugkraft-aufnehmende Materiallage eine maximale Zugkraft von ca. 12 N auf.

Der Höhenbereich des Korpus beträgt ca. 12mm. Die Breite von Nieder- und Höhenbereich des Korpus beträgt jeweils ca. 25 mm.

Durch die zugkraft-aufnehmende Materiallage werden bei der Ausbildung des Höhenprofils, welche zumeist unter Verformung einer Schaumstoffbahn oder eines anderen Schaumstoffteils, aus welchem der Korpus 2 herausgearbeitet(zumeist herausgeschnitten bzw. herausgetrennt) wird, beträchtliche Deformations- und Dehnungskräfte auf den Schaumstoffkorpus ausgeübt, welche von der Zugkraft-aufnehmenden Materiallage 8 vorzugsweise weitestgehend oder vollständig aufgenommen werden können. Unerwünschte Verformungen oder Dehnungen des Schaumstoffkorpus bei der Ausbildung des Höhenprofils werden hierdurch vermieden, so dass der Korpus formgenauer und reproduzierbarer herstellbar ist.

Das Weichschaumstoffmaterial des Korpus, insbesondere des höhenprofilierten Bereichs desselben, hat eine Stauchhärte von ca. 3 KPa nach DIN EN ISO 3386. Das Schaumstoffmaterial (ohne Imprägnierung) hat bspw. eine Luftdurchlässigkeit von 100-200 l/m2s.

Die Materiallage 8, hier in Form einer Vlieslage, weist eine Reißkraft von ca. 30 N/50mm Lagen- bzw. Korpuslängsrichtung auf und eine Bruchdehnung(Reißdehnung) von ca. 15-20%. Die Materiallage ist im Wesentlichen in Bezug auf die Zugfestigkeit und Reißdehnung isotrop ausgebildet, bezüglich der Richtungen in der Hauptebene der Materiallage (also parallel zu deren Flächenausdehnung der Lage). Die Materialeigenschaften der Materiallage an sich beziehen sich auf die oben angegebenen ERT-Standards. Das Flächengewicht beträgt 25 g/m2. Das Vlies besteht aus Kunststoffasern. Die Vliesfasern sind punktverhaftet.

Die Zugfestigkeit des Schaumstoffkorpus mit Materiallage ist nach dem Ausführungsbeispiel aufgrund der Materiallage um ca. den Faktor 1,5 oder nach anderen Ausführungsbeispielen auch um den Faktor ≥ 2-3 erhöht gegenüber der Zugfestigkeit der Zone des Korpus aus Schaumstoffmaterial mit höchster Zugfestigkeit, was in Längsrichtung des Dichtbandes bzw. Korpus gilt, nach dem Ausführungsbeispiel auch für jede Richtung in einer zur Hauptmittelebene M(K) des Korpus verlaufenden Ebene. Durch die Zugkraft-aufnehmende Materiallage ist die maximale Zugkraft des Schaumstoffkorpus, gegenüber einem Schaumstoffkorpus ohne Zugkraft-aufnehmende Materiallage, um ca. 4 N und um ca. 50% % erhöht, bezogen auf den 13mm breiten Prüfabschnitt.

Die Zugkraft-aufnehmende Materiallage ist hier Zugkraftaufnehmend mit dem Schaumstoffkorpus verbunden, beispielsweise durch eine Klebeschicht 9a, hier in Form eines Hotmelt. Die Materiallage kann dann unmittelbar stoffschlüssig an dem jeweiligen Bauteil festgelegt sein, z.B. durch Anschäumen eines Bauteilbereichs aus Schaumstoffmaterial an das Dichtband bei der Bauteilherstellung wie z.B. Herstellung einer Verbundplatte mit Schaumstoffkern. Gegebenenfalls kann die Materiallage 8 auch Teil eines Verbundmaterials mit Klebeschicht sein, bspw. einer Hotmelt-Klebeschicht oder auf der dem Korpus 2 gegenüberliegenden Seite mit einer Klebeschicht 9b oder einem anderen Befestigungsmittel versehen sein, zur Befestigung des Dichtbandes in der Fuge an dem jeweiligen Bauteil.

Die Breite der Materiallage 8 entspricht hier der Breite des Dichtbandes 1 bzw. des Schaumstoffkorpus 2. Der Schaumstoffkorpus 2 ist hier einteilig ausgebildet.

Das Höhenprofil im Bereich der Höhenänderung oder in Bezug auf den Schaumstoffkorpus insgesamt ist hier von einer Schmalseite 4a zu der gegenüberliegenden Schmalseite 4b hin durchgehend monoton ansteigend ausgebildet und im speziellen stetig. Das Höhenprofil weist einen Wendepunkt W und sich daran anschließende konkav und konvex gekrümmte Profilbereiche auf. Gegebenenfalls kann das Höhenprofil auch mehrere Wendepunkte aufweisen. Gegebenenfalls können auch Teilbereiche des Höhenprofils linear ausgebildet sein, beispielsweise auch in Form linearer Profilanstiege oder Profilgefälle. Dies kann jeweils allgemein im Rahmen der Erfindung gelten.

Die Zugkraft-aufnehmende Materiallage 8 ist hier als Textillage oder Folie ausgebildet. Die Materiallage, insbesondere bei Ausführung als Folie, ist auf der dem Bauteil zugewandten Seite, mit welcher es stoffschlüssig, insbesondere durch Verkleben oder Anschäumen verbunden ist, mit einer Fasermateriallage, bspw. einem Vlies, kaschiert, um die Verbindung zu verbessern. Siehe dazu vorne die Anmerkung mit dem Primer. Die Materiallage ist hier als Flächengebilde ausgebildet, also mit einer vergleichsweise geringen Höhe, die hier im Bereich von 0,1-0,2 mm liegt, so dass diese in der Fuge wenig Raum einnimmt und bei der Profilierung flexibel ist.

Basierend auf einem Schaumstoffkorpus wie oben beschrieben, mit einer Zugfestigkeit von 100KPa und einer Reißdehnung von ca. 200% nach DIN EN ISO 1798 (Normstab Typ 1), Dicke der Schaumstofflage 12 mm im Höhenbereich und 8 mm im Niederbereich, ergeben sich folgende erfindungsgemäße Beispiele für den Schaumstoffkorpus (jeweils PU-Schaum) mit Materiallage (der Probekörper ist jeweils dem Niederbereich des Korpus entnommen, welcher über eine Breite von 25 mm eine gleichbleibende Höhe aufweist):
a) Verwendung einer Materiallage aus einem Vliesmaterial (Flächengewicht: 25 g/m2), befestigt an dem Schaumstoffkorpus durch Hotmelt-Schicht: Zugfestigkeit 150 KPa, maximale Zugkraft: 12N, Reißdehnung 30%
b) Verwendung einer Materiallage in Form einer Alu-Gitterfolie, befestigt an dem Schaumstoffkorpus durch Hotmelt-Schicht: Zugfestigkeit 700 KPa, maximale Zugkraft ca. 55N, Reißdehnung 7%
c) Verwendung einer Materiallage in Form einer metallbeschichteten PET-Folie, befestigt an dem Schaumstoffkorpus durch Hotmelt-Schicht: Zugfestigkeit 330 KPa, maximale Zugkraft ca. 25N, Reißdehnung 30%
d) Verwendung einer Materiallage in Form einer Kunststofffolie (HDPE), befestigt an dem Schaumstoffkorpus durch Hotmelt-Schicht: Zugfestigkeit 300 KPa, maximale Zugkraft ca. 24N, Reißdehnung 50%
e) Verwendung einer Materiallage mit einem textilen Materialgelege und einer Vlieskaschierung (Vlies: 25 g/m2), befestigt an dem Schaumstoffkorpus durch Hotmelt-Schicht: Zugfestigkeit 1.800 KPa, maximale Zugkraft ca. 120N , Reißdehnung 15%

Die Stauchhärte des Korpusmaterials beträgt hier ca. 3 KPa nach DIN EN ISO 3386.

Die Einbausituation gemäß Figur 4, kann entsprechend auch für die anderen Ausführungsbeispiele der Figuren 2 und 3 oder allgemein im Rahmen der Erfindung gelten. Die Bauteile 101, 102 können jeweils Verbundplatten darstellen, welche eine Höhe von 10 m aufweisen können, bspw. zur Errichtung von Gebäudewänden. Die Platten können einen Schaumstoffkern, z.B. aus Hartschaumstoff, und an den außen liegenden Großflächen den Kern überdeckende Außenschichten aus einem wetterfesten Material wie Metallbleche oder Kunststoffplatten aufweisen. Durch Anlegen des Dichtbandes an den frisch geschäumten Kern bzw. Anschäumen des Kernes an das durch eine Einrichtung abgestützte Dichtband, kann der Kern mit dem Dichtband verbunden werden, insbesondere mit der Materiallage.

Figur 2 zeigt eine Abwandlung eines Dichtbandes nach Figur 1, wobei gleiche Merkmale mit gleichen Bezugsziffern versehen sind. Das zu Figur 1 Gesagte kann entsprechend gelten, sofern sich aus dem Zusammenhang nichts anderes ergibt, eneso zu den anderen Ausführungsbeispielen.

Der Schaumstoffkorpus 2 ist hier zweiteilig ausgebildet, mit einer höhenprofilierten Schaumstofflage 2a deren Höhenprofil der des Korpus 2 gemäß Figur 1 entspricht, also ebenfalls mit Höhenbereich 5a, Niederbereich 5c und Übergangsbereich 5b. Die weitere Schaumstofflage 2b ist an der Unterseite 2a' der profilierten Lage 2a angeordnet und weist hier eine konstante Höhe auf, im speziellen einen rechteckigen Querschnitt. Die Breite der beiden Lagen 2a und 2b ist hier identisch, sie kann gegebenenfalls jedoch auch verschieden sein. An der Basis 3a des mehrlagigen Schaumstoffkorpus ist eine Zugkraft-aufnehmende Materiallage 8 angeordnet.

Die beiden Schaumstofflagen 2a und 2b können aus demselben oder aus unterschiedlichem Schaumstoffmaterial bestehen, gegebenenfalls aus Schaumstoffmaterialien unterschiedlicher Steifigkeit bzw. Härte, unterschiedlicher Luftdurchlässigkeit, unterschiedlicher Porenstruktur oder dergleichen. Die beiden Lagen 2a und 2b sind in der Regel dauerhaft miteinander verbunden, beispielsweise durch eine Klebelage 7. Die Zugfestigkeit der Materiallage 8 ist hier größer als die Zugfestigkeit des Schaumstoffkorpus, welcher aus den beiden durch die Klebelage 7 verbundenen Schaumstofflagen 2a und 2b besteht. Hier wie allgemein im Rahmen der Erfindung bezieht sich die Zugfestigkeit des Schaumstoffkorpus auf den gesamten Querschnitt des höhenprofilierten Korpus.

Nach einer Abwandlung der Ausführungsform nach Figur 1 und 2 schließen sich an den Höhenbereich 5a und den Niederbereich 5c ein- oder beidseitig an den Schmalseiten plateauförmige Bereiche mit jeweils gleich bleibender Höhe an. Diese können sich jeweils über 40% oder mehr der Breite des Korpus erstrecken, so dass der Höhenübergangsbereich entsprechend schmal ist. Dies kann allgemein im Rahmen der Erfindung gelten.

Figur 3 zeigt eine Abwandlung der Ausführungsform nach Figur 1, wobei auf das oben Gesagte vollumfänglich verwiesen wird. Zusätzlich zu dem Schaumstoffkorpus 2 ist hier unterhalb des Korpus 2, genauer gesagt an der Unterseite der Materiallage 8 eine weitere Schaumstofflage 10 (oder ggf. Nichtschaumstofflage) angeordnet. In Bezug auf die zusätzliche Schaumstofflage 10 kann das zu der Schaumstofflage 2b gemäß Figur 2 Gesagte gelten, es kann aber auch eine Lage mit anderen Materialeigenschaften als die Lage 2b sein, z.B. deutlich höherer Steifigkeit. Diese Schaumstofflage 10 ist an der Materiallage vorzugsweise ebenfalls dauerhaft befestigt, beispielsweise durch eine Klebeverbindung, besonders bevorzugt mit entsprechender Ausführung der Materiallage 8 mit beidseitigen Klebeschichten 9a und 9b entsprechend Figur 2. Die zusätzliche Materiallage 10 kann vor der Höhenprofilierung des Schaumstoffkorpus an der Materiallage 8 bzw. dem Korpus 2 angeordnet bzw. mit dieser befestigt wie z. B. verklebt sein oder erst nachfolgend zu der Profilierung mit dieser verbunden werden. An der Unterseite der weiteren Schaumstofflage 10 ist ein Befestigungsmittel 11 zur Festlegung des Dichtbandes an einem Bauteil vorgesehen, beispielsweise ebenfalls in Form einer Klebeschicht oder Selbstklebeschicht. Dies kann bspw. bei Paneelen mit einem Kern aus Mineral- oder Glaswolle realisiert sein.

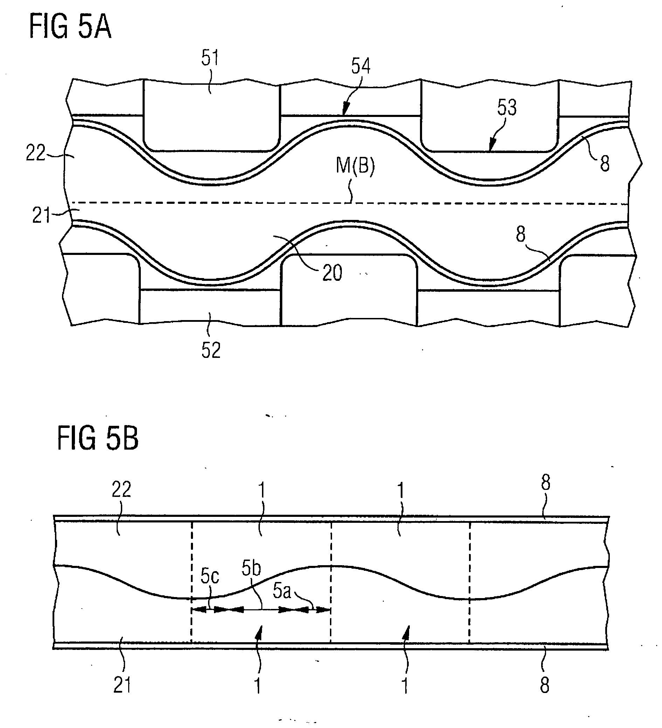

Figur 5a verdeutlicht eine Höhenprofilierung des Dichtbandes 1 in einem Formschnittverfahren, was allgemein im Rahmen der Erfindung gelten kann. Eine Schaumstoffbahn 20 aus welcher zwei einander überdeckende Bahnabschnitte 21, 22 welche mit ihren Höhenprofilen aneinander liegen, hergestellt werden, weist hier eine mehrfache Dichtbandbreite auf. Die Bahn 20 ist beidseitig mit einer Materiallage 8 versehen, welche jeweils zugkraftaufnehmend mit der Bahn 20 verbunden ist, bspw. durch Verklebung. Die Schaumstoffbahn 20 wird mittels der Formungswerkzeuge 51, 52 in Form von Profilwalzen mit Erhebungen 53 und Senken 54 profiliert, was hier unter gleichzeitiger Kompression des Schaumstoffmaterials erfolgt. Volumenbereiche des Schaumstoffmaterials werden hierdurch beispielsweise von dem oberhalb der Hauptmittelebene M(B) der Bahn 20 liegenden Bereich in den unterhalb der Hauptmittelebene M(B) der Bahn liegenden Bereich verschoben. In diesem Zustand erfolgt ein Durchschneiden der Bahn entlang der Hauptmittelebene oder einer Ebene parallel hierzu durch ein geeignetes Schneidwerkzeug. Hierdurch entstehen gemäß Figur 5b zwei Bahnabschnitte 21, 22 mit einander kongruentem gegensinnigen Höhenprofil mit einander gegenüberliegenden Höhenbereichen und Niederbereichen, entsprechend den Höhenbereichen 5a und Niederbereichen 5c des Dichtbandes 1.

Figur 5b zeigt die in Längsrichtung durchtrennte Bahn 20 bzw. die beiden Bahnabschnitte 21, 22 in vollständig frei expandiertem Zustand. Die beiden Bahnabschnitte 21, 22 mit jeweils mehrfacher Dichtbandbreite können dann auf geeignete Weise in einzelne Dichtbänder 1 zerlegt werden, unter Durchtrennung der Bahnabschnitte 21, 22 in deren Längsrichtung.

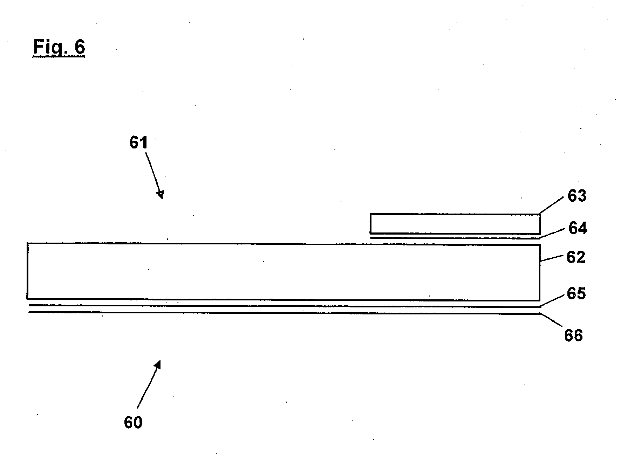

Fig. 6 zeigt eine weitere Ausführungsform eines Dichtbandes 60, welches einen 2-teiligen Schaumstoffkorpus 61 mit Höhenprofil aufweist. Der Korpus 61 besteht hier aus einem Basisstreifen 62, welcher die Korpusbreite aufweist, mit aufgeklebtem Zusatzstreifen 63 geringerer Breite, wobei Basisstreifen 62 und Zusatzstreifen 63 an einer Schmalseite bündig aneinander angrenzen. Der Zusatzstreifen 63 hat hier etwa 1/3 der Breite des Basisstreifens 62, bildet also mit dem Basisstreifen ein Stufenprofil aus. Basisstreifen und Zusatzstreifen sind mittels einer Klebeschicht 64, hier einer Selbstklebeschicht, miteinander verbunden. Der Zusatzstreifen 63 hat hier 1/3 der Höhe des Basisstreifens 62. Zusatzstreifen und Basisstreifen bestehen hier aus demselben Schaumstoffmaterial aber auch aus unterschiedlichen Materialien bestehen, insbesondere unterschiedlichen Schaumstoffmaterialien. An der Unterseite des Basisstreifens 62, dem Zusatzstreifen 63 gegenüberliegend, ist die Zugkraft-aufnehmende Materiallage 66 angeordnet, hier mittels Klebelage 65, z. B. Hotmelt-Schmelzkleber-Lage, angeklebt. Die Zugkraft-aufnehmende Materiallage erstreckt sich über die gesamte Breite bzw. Fläche des Basisstreifens 62. Bezüglich der Ausbildung der Zugkraft-aufnehmenden Materiallage sei zum Ausführungsbeispiel 1 vollinhaltlich Bezug genommen. Der Basisstreifen kann aus dem Material des Korpus des Beispiels nach Fig. 1 bestehen.

## Patentansprüche

1. Schaumstoff-Dichtband (1) zur Abdichtung einer Fuge (100) zwischen benachbarten Bauteilen (101, 102), wobei das Dichtband (1) zwei gegenüberliegende Breitseiten (3a, 3b) aufweist, welche an zwei gegenüberliegenden Kontaktflächen der beiden Bauteile (101, 102) unter Abdichtung der Fuge (100) anlegbar oder mit diesen zur Zusammenwirkung bringbar sind, und mit zwei die Breitseiten verbindenden Schmalseiten (4a, 4b), wobei das Dichtband (1) einen Schaumstoffkorpus (2) aufweist, welcher ein- oder mehrteilig ausgebildet sein kann, wobei der Schaumstoffkorpus (2) eine Breitseite (3a') als Basis aufweist, wobei der Korpus (2) an der Basis als über dessen Breite ununterbrochen durchgehendes Schaumstoffteil ausgebildet ist und an der anderen Breitseite (3b') über die Breitenerstreckung der Basis ein Höhenprofil mit einem Höhenbereich (5a) und einem Niederbereich (5c) aufweist, **dadurch gekennzeichnet, dass** an der Basis des Schaumstoffkorpus (2) eine Zugkraft-aufnehmende, verformbare Materiallage (8) dauerhaft und in Bandlängsrichtung Zugkraft-aufnehmend befestigt ist, und dass der Schaumstoffkorpus (2) mit Zugkraft-aufnehmender Materiallage (8) gegenüber dem Schaumstoffkorpus eine verminderte Reißdehnung aufweist, und
(i) dass der Schaumstoffkorpus (2) mit Zugkraft-aufnehmender. Materiallage (8) eine Reißdehnung von ≤ 25 % aufweist und
(ii) dass die Reißdehnung des Schaumstoffkorpus (2) durch die Zugkraft-aufnehmende Materiallage (8) um mehr als85 % bezogen auf die Reißdehnung des Korpus (2) ohne Zugkraft-aufnehmende Materiallage (8) verringert wird,
wobei die Reißdehnung nach (i) und/oder (ii) jeweils bezogen ist auf einen Prüfabschnitt in Dichtbandlängsrichtung einer Breite von 13 mm.

2. Dichtband nach Anspruch 1, **dadurch gekennzeichnet, dass** die Zugkraft-aufnehmende Materiallage (8) die maximale Zugkraft des Schaumstoffkorpus (2), gegenüber einem Schaumstoffkorpus (2) ohne Zugkraft-aufnehmende Materiallage (8), um ≥ 3 N und/oder um ≥ 25 % erhöht, wobei die maximale Zugkraft jeweils bezogen ist auf einen Prüfabschnitt in Dichtbandlängsrichtung einer Breite von 13 mm.

3. Dichtband nach einem der Ansprüche 1 oder 2, **dadurch gekennzeichnet, dass** der Schaumstoffkorpus (2) ohne Zugkraft-aufnehmende Materiallage (8) eine maximale Zugkraft von ≤ 40 N aufweist, wobei die maximale Zugkraft bezogen ist auf einen Prüfabschnitt in Dichtbandlängsrichtung einer Breite von 13 mm.

4. Dichtband nach einem der Ansprüche 1-3, **dadurch gekennzeichnet, dass** das höhenprofilierte Material des Schaumstoffkorpus (2) eine Zugfestigkeit von ≤ 300 KPa nach DIN EN ISO 1798 aufweist.

5. Dichtband nach einem der Ansprüche 1-4, **dadurch gekennzeichnet, dass** die Zugkraft-aufnehmende Materiallage (8) die Zugfestigkeit des Schaumstoffkorpus (2) um ≥ 30 KPa (Kilopascal) erhöht, gegenüber dem Korpus (2) ohne die Zugkraft-aufnehmende Materiallage (8).

6. Dichtband nach einem der Ansprüche 1-5, **dadurch gekennzeichnet, dass** das Material der Zugkraft-aufnehmenden Materiallage (8) eine Zugfestigkeit von ≥ 10 N/50mm aufweist.

7. Dichtband nach einem der Ansprüche 1-6, **dadurch gekennzeichnet, dass** der Schaumstoffkorpus (2) an der höhenprofilierten Breitseite (3b') oder insgesamt als einstückig durchgehender Schaumstoffabschnitt ausgebildet ist.

8. Dichtband nach einem der Ansprüche 1-6, **dadurch gekennzeichnet, dass** das Höhenprofil durch zumindest zwei in Bezug auf eine Breitseite übereinander angeordnete und mit einander verbundene separate Schaumstoffstreifen (62, 63) unterschiedlicher Breite ausgebildet ist.

9. Dichtband nach einem der Ansprüche 1-8, **dadurch gekennzeichnet**, (i) dass das Höhenprofil im Bereich der Höhenänderung oder von einer Schmalseite zu der gegenüberliegenden Schmalseite hin durchgehend monoton ansteigt, und/oder (ii) dass das Höhenprofil stetig ausgebildet ist.

10. Dichtband nach einem der Ansprüche 1-9, **dadurch gekennzeichnet, dass** die Zugkraft-aufnehmende Materiallage (8) eine Textillage, Vlies oder Folie ist.

11. Dichtband nach einem der Ansprüche 1-10, **dadurch gekennzeichnet, dass** die Breite der Zugkraft-aufnehmenden Materiallage (8) der Dichtbandbreite entspricht.

12. Dichtband nach einem der Ansprüche 1-11, **dadurch gekennzeichnet, dass** der Schaumstoffkorpus (2) mehrere übereinander angeordnete Schaumstofflagen (2a, 2b) aufweist.

13. Dichtband nach einem der Ansprüche 1-12, **dadurch gekennzeichnet, dass** die Zugkraft-aufnehmende Materiallage (8) an der Basis des höhenprofilierten Schaumstoffstückes des Korpus (2) Zugkraft-aufnehmend festgelegt ist.

14. Dichtband nach einem der Ansprüche 1-13, **dadurch gekennzeichnet**, die Zugkraft-aufnehmende Materiallage (8) zwischen zwei Schaumstofflagen (2a, 2b; 62, 63) des Korpus (2) angeordnet ist.

15. Verbundplatte, die im Verbund (V) mit gleichartigen Verbundplatten (101, 102) in einer Plattenebene (E) zur Erstellung einer Wand, Wandfüllung oder Wandabdeckung bzw. eines Daches oder einer Dachabdeckung geeignet ist, an zumindest zwei einander gegenüberliegenden Rändern (104, 105) zueinander komplementäre Verbindungsmittel (106) zur Verbindung mit benachbarten Verbundplatten aufweist und mit denselben jeweils unter Ausbildung eines Spaltes (100) vorzugsweise mit einem gegen Luft und/oder Feuchtigkeit dichtenden Labyrinth verbindbar ist, wobei zur Abdichtung des Spaltes (100) zumindest an einem Rand der Verbundplatte (101, 102) ein Dichtband (1) lagefixiert angeordnet ist, **dadurch gekennzeichnet, dass** das Dichtband (1) nach einem der Ansprüche 1-14 ausgebildet ist.

16. Verbundplatte nach Anspruch 15, **dadurch gekennzeichnet, dass** die Verbundplatten (101, 102) einen Schaumstoffkern und gegebenenfalls an der vorderen und/oder hinteren Plattenoberfläche eine Decklage (101a, 102a) aus einem Nichtschaumstoffmaterial aufweist, und dass der Schaumstoffkern mit dem Dichtband vorzugsweise unmittelbar durch das Material des Schaumstoffkerns, stoffschlüssig verbunden ist.

17. Verfahren zur Herstellung eines Dichtbandes nach einem der Ansprüche 1-14, wobei nach dem Verfahren eine Schaumstoffbahn (20) mit einer gegebenen Zugfestigkeit bereitgestellt wird, wobei mindestens eine verformbare Materiallage (8) an mindestens einer Breitseite der Schaumstoffbahn oder in einer zu der Breitseite parallelen Ebene innerhalb des Korpus Zugkraft-aufnehmend und dauerhaft an der Bahn (20) bzw. dem Korpus befestigt wird, beispielsweise durch Verklebung, und mit einer zwischen den beiden Bahnbreitseiten angeordneten Hauptmittelebene M(B) der Bahn (20), wobei die Bahn (20) in Längszonen wechselseitig derart verformt wird,
dass in Bezug auf die Hauptmittelebene M(B) der Schaumstoffbahn (20) Volumenbereiche des Schaumstoffmaterials von einer Seite der Hauptmittelebene der Bahn zu der anderen Seite der Hauptmittelebene verschoben werden, anschließende Durchtrennung der Bahn (20) in Längsrichtung entlang der Hauptmittelebene der Bahn (20) oder einer zu dieser parallel angeordneten Trennebene unter Ausbildung zweier Bahnabschnitte (21, 22) geringerer Höhe als die der Bahn (20) und gegebenenfalls anschließende Zerteilung der beiden Bahnabschnitte (21, 22) in Längsabschnitte unter Ausbildung einer Mehrzahl von Dichtbändern (1), und dass
(i) die Zugkraft-aufnehmende Materiallage (8) eine Reißdehnung aufweist, so dass der Schaumstoffkorpus (2) mit Zugkraft-aufnehmender Materiallage (8) eine Reißdehnung von ≤ 25 % aufweist und die Reißdehnung des Schaumstoffkorpus (2) durch die Zugkraft-aufnehmende Materiallage (8) um mehr als 85 % bezogen auf die Reißdehnung des Korpus (2) ohne Zugkraft-aufnehmende Materiallage (8) verringert wird, und
(ii) dass das Material der Zugkraft-aufnehmenden Materiallage (8) eine Reißdehnung von ≤ 50% der Reißdehnung des Schaumstoffkorpus (2) aufweist, die Reißdehnung zu (i) und (ii) jeweils bezogen auf einen Prüfabschnitt in Dichtbandlängsrichtung einer Breite von 13mm.

18. Verfahren nach Anspruch 17, **dadurch gekennzeichnet, dass** nach dem Verfahren an beiden gegenüberliegenden Breitseiten der Schaumstoffbahn (20) oder beidseitig der Hauptmittelebene M(B) der Bahn (20) jeweils in einer zu der Breitseite parallelen Ebene innerhalb des Korpus (2) aber außerhalb des Durchtrennungsbereichs des Korpus (2) jeweils eine Zugkraft-aufnehmende Materiallage (8) Zugkraft-aufnehmend und dauerhaft befestigt wird.

19. Verfahren nach Anspruch 17 oder 18, **dadurch gekennzeichnet, dass** das Höhenprofil durch ein Formschnittverfahren ausgebildet wird.

## Claims

1. Foamed sealing tape (1) for sealing a joint (100) between adjacent building parts (101, 102), wherein said sealing tape (1) comprises to opposing broadsides (3a, 3b) that can be applied against or caused to cooperate with two opposing contact surfaces of the two building parts (101, 102) while sealing said joint (100), and comprising two narrow sides (4a, 4b) connecting said broadsides, wherein the sealing tape (1) includes a foamed body (2) that can be formed in a one or multipart fashion, wherein said foamed body (2) has one broadside (3a') as a basis, wherein said body (2) is formed on said basis as a foamed element which is uninterrupted and continuous over the width of the body, and has a high elevation portion (5a) and a low elevation portion (5c) on the other broadside (3b'), over the width extension of the basis, **characterized in that** a tensile force-receiving, deformable material layer (8) is fixed to the basis of the foamed body (2) permanently and in such a manner as to receive a tensile force in the longitudinal direction of the tape and that the foamed body (2) having the tensile force-receiving material laver (8) has a reduced elongation at break compared to the foamed body and
(i) that the foamed body (2) having the tensile force-receiving material layer (8) has an elongation at break of ≤ 25% and
(ii) that the elongation at break of the foamed body (2) is reduced by said tensile force-receiving material layer (8) by more than 85% based on the elongation at break of the body (2) not having said tensile force-receiving material layer (8),
wherein the elongation at break according to (i) and/or (ii) is based in each case on a test section of 13 mm width in the longitudinal direction of the sealing tape.

2. Sealing tape according to claim 1, **characterized in that** the tensile force-receiving material (8) increases the maximum tensile force of the body (2) by ≥ 3 N and/or by ≥ 25% compared to a foamed body (2) not having said tensile force-receiving layer (8), wherein the maximum tensile force is based in each case on a test section of 13 mm width in the longitudinal direction of the sealing tape.

3. Sealing tape according to one of the claims 1 or 2, **characterized in that** the foamed body (2) not having said tensile force-receiving material layer (8) has a maximum tensile force of ≤ 40 N, wherein said maximum tensile force is based on a test section of 13 mm width in the longitudinal direction of the sealing tape.

4. Sealing tape according to one of the claims 1 to 3, **characterized in that** the material of the foamed body (2) having the elevation profile has a tensile strength of ≤ 300 KPa according to DIN EN ISO 1798.

5. Sealing tape according to one of the claims 1 to 4, **characterized in that** the tensile force-receiving material layer (8) increases the tensile force of the foamed body (2) by ≥ 30 KPa (kilopascals) compared to the body (2) not having said tensile force-receiving material layer (8).

6. Sealing tape according to one of the claims 1 to 5, **characterized in that** the material of the tensile force-receiving material layer (8) has a tensile strength of ≥ 10 N/50 mm.

7. Sealing tape according to one of the claims 1 to 6, **characterized in that** the foamed body (2) is formed on the broadside (3b') having the elevation profile or is entirely formed as a one-piece continuous foamed section.

8. Sealing tape according to one of the claims 1 to 6, **characterized in that** the elevation profile is formed by at least two differently wide foamed material strips (62, 63) which are with respect to one broadside arranged one on top of the other and connected to each other.

9. Sealing tape according to one of the claims 1 to 8, **characterized in that** (i) the elevation profile continuously increases monotonously from one narrow side to the opposing narrow side or in the region of the change in height and/or (ii) that the elevation profile is formed so as to be constant.

10. Sealing tape according to one of the claims 1 to 9, **characterized in that** the tensile force-receiving material layer (8) is a textile layer, a non-woven material or a film.

11. Sealing tape according to one of the claims 1 to 10, **characterized in that** the width of the tensile force-receiving material layer (8) corresponds to the width of the sealing tape.

12. Sealing tape according to one of the claims 1 to 11, **characterized in that** the foamed body (2) includes several foamed layers (2a, 2b) arranged one on top of the other.

13. Sealing tape according to one of the claims 1 to 12, **characterized in that** the tensile force-receiving material layer (8) is fixed to the base of the foamed piece of the body (20) having said elevation profile in a tensile force-receiving manner.

14. Sealing tape according to one of the claims 1 to 13 **characterized in that** the tensile force-receiving material layer (8) is arranged between two foamed layers (2a, 2b; 6s, 63) of the body (2).

15. Composite board which, in combination (V) with similar composite boards (101, 102) in a board plane (E), is suitable for constructing a wall, a wall panel or wall covering or a roof or a roof covering, which includes on at least two mutually opposite rims (104, 105) connecting means (106) that are complementary to each other, for the connection to adjacent composite boards, and which is connectible to the same preferably with a labyrinth sealing against air and/or humidity while respectively forming a gap (100), wherein for sealing said gap (100), a sealing tape (1) is arranged so as to be fixed in position on at least one rim of said composite board (101, 102), **characterized in that** the sealing tape (1) is formed in accordance with one of the claims 1 to 14.

16. Composite board according to claim 15, **characterized in that** the composite board (101, 102) includes a foamed core and optionally a top layer (101a, 102a) from a non-foamed material on the front and/or rear surface of the board, and that the foamed core is preferably directly connected to the sealing tape substance-to-substance by the material of the foamed core.

17. Method for producing a sealing tape according to one of the claims 1 to 14, wherein in the method, a foam sheet (20) having a given tensile strength is prepared, wherein at least one deformable material layer (8) is fixed to said sheet (20) or said body on at least one broadside or in a plane parallel to said broadside within said body in a tensile force-receiving manner and permanently, for example by bonding, and with a main center plane M(B) of the sheet (20) arranged between said two broadsides of the sheet, wherein the sheet (20) is alternatingly deformed in the longitudinal zones in such a manner that, with respect to the main center plane M(B) of the foamed sheet (20), parts of the volume of the foamed material are displaced from one side of the main center plane of the sheet to the other side of the main center plane, subsequently severing the sheet (20) in the longitudinal direction along the main center plane of the sheet (20) or in a separation plane arranged parallel to this plane while forming two sheet sections (21, 22) of a height smaller than that of the sheet (20), and wherein said two sheet sections (21, 22) are optionally divided into longitudinal sections forming a plurality of sealing tapes (1), and that
(i) the tensile force-receiving layer (8) has an elongation at break such that the foamed body (2) having the tensile-force receiving material layer (8) exhibits an elongation at break of ≤ 25% and the elongation at break of the foamed body (2) is reduced by said tensile force-receiving material layer (8) by more than 85%, based on the elongation at break of the body (2) not having said tensile force-receiving material layer (8), and
(ii) that the material of the tensile-force receiving material layer (8) has an elongation at break of ≤ 50% of the elongation at break of the foamed body (2), the elongation at break ad (i) and (ii) being based in each case on a test section of a width of 13 mm in the longitudinal direction of the sealing tape.

18. Method according to claim 17, **characterized in that** in accordance with the method, a tensile force-receiving material layer (8) is respectively fixed in a tensile force-receiving manner and permanently to both opposing broadsides of the foam sheet (20) or on both sides of the main center plane M(B) of the sheet (20), each in a plane parallel to the broadside inside of the body (2), but outside of the severing region of said body (2).

19. Method according to claim 17 or 18, **characterized in that** the elevation profile is formed by a contour-cutting process.

## Revendications

1. Bande d'étanchéité (1) pour l'étanchement d'un joint (100) entre des éléments de construction (101, 102) adjacents, ladite bande d'étanchéité (1) présentant deux côtés larges opposés (3a, 3b) qui peuvent être appliqués contre ou mis en coopération avec deux surfaces de contact opposées des deux éléments de construction (101, 102) en rendant étanche ledit joint (100), et présentant deux côtés étroits (4a, 4b) reliant les deux côtés larges, la bande d'étanchéité (1) comportant un corps en mousse (2) qui peut être formé en une ou en plusieurs parties, ledit corps en mousse (2) comportant un côté large (3a') comme base et étant formés comme une pièce en mousse continue sur la base et sur toute la largeur du corps, et comportant un profil de hauteur avec une partie haute (5a) et une partie basse (5c) sur l'autre côté large (3b') et sur tout son étendue de largeur, **caractérisée en ce qu'**il est fixé à la base du corps en mousse (2) une couche de matériau déformable (8) recevant une force de tension, de manière permanente et dans la direction longitudinale de la bande et que le corps en mousse (2) comportant ladite couche de matériau (8) recevant la force de tension présente un allongement à la rupture réduit par rapport au corps en mousse et
(i) que le corps en mousse (2) comportant ladite couche de matériau (8) recevant la force de tension présente un allongement à la rupture de ≤ 25 % et
(ii) que l'allongement à la rupture du corps (2) est réduit par la couche de matériau (8) recevant la force de tension de plus de 85 % par rapport à l'allongement à la rupture du corps (2) sans la couche de matériau (8) recevant la force de tension,
ledit allongement à la rupture selon (i) et/ou (ii) étant respectivement rapporté à une section de test d'une largeur de 13 mm dans la direction longitudinale de la bande d'étanchéité.

2. Bande d'étanchéité selon la revendication 1, **caractérisée** en que la couche de matériau (8) recevant la force de tension augmente la force de tension maximale du corps en mousse (2) de ≥ 3 N et/ou de 25 % par rapport au corps en mousse (2) sans la couche de matériau (8) recevant la force de tension, ledit allongement à la rupture étant respectivement rapporté à une section de test d'une largeur de 13 mm dans la direction longitudinale de la bande d'étanchéité.

3. Bande d'étanchéité selon l'une des revendications 1 ou 2, **caractérisée en ce que** le corps en mousse (2) sans la couche de matériau (8) recevant la force de tension présente une force de tension maximale de ≤ 40 N, ladite force de tension maximale étant rapportée à une section de test d'une largeur de 13 mm dans la direction longitudinale de la bande d'étanchéité.

4. Bande d'étanchéité selon l'une des revendications 1 à 3, **caractérisée en ce que** le matériau profilé en hauteur du corps en mousse (2) présente une résistance à la traction de ≤ 300 KPa selon DIN EN ISO 1798.

5. Bande d'étanchéité selon l'une des revendications 1 à 4, **caractérisé en ce que** la couche de matériau (8) recevant la force de tension augmente la résistance à la traction du corps (2) de ≥ 30 KPa (kilopascals) par rapport au corps (2) sans la couche de matériau (8) recevant la force de tension.

6. Bande d'étanchéité selon l'une des revendications 1 à 5, **caractérisée en ce que** le matériau de la couche de matériau (8) recevant la force de tension présente une résistance à la traction de ≥ 10 N/50 mm.

7. Bande d'étanchéité selon l'une des revendications 1 à 6, **caractérisée en ce que** le corps en mousse (2) est formé sur le côté large (3b') profilé en hauteur ou dans son ensemble comme une partie en mousse continue en une pièce.

8. Bande d'étanchéité selon l'une des revendications 1 à 6, **caractérisée en ce que** le profil de hauteur est formé d'au moins deux rubans en mousse séparés des largeurs différentes (62, 63) qui sont interreliés et superposés par rapport à un côté large.

9. Bande d'étanchéité selon l'une des revendications 1 à 8, **caractérisée en ce que** (i) le profil de hauteur augmente de manière monotone et continue d'un côté étroit vers le côté étroit opposé dans la zone de changement de hauteur et/ou (ii) le profil est formé de manière constante.

10. Bande d'étanchéité selon l'une des revendications 1 à 9, **caractérisée en ce que** la couche de matériau (8) recevant la force de tension est une couche textile, un non-tissé ou un film.

11. Bande d'étanchéité selon l'une des revendications 1 à 10, **caractérisée en ce que** la largeur de la couche de matériau (8) recevant la force de tension corresponde à la largeur de la bande d'étanchéité.

12. Bande d'étanchéité selon l'une des revendications 1 à 11, **caractérisée en ce que** le corps en mousse (2) comporte plusieurs de couches superposées (2a, 2b).

13. Bande d'étanchéité selon l'une des revendications 1 à 12, **caractérisée en ce que** la couche de matériau (8) recevant la force de tension est fixée à la base de la pièce en mousse profilée en hauteur du corps (2) de manière à recevoir la force de tension.

14. Bande d'étanchéité selon l'une des revendications 1 à 13, **caractérisée en ce que** la couche de matériau (8) recevant la force de tension est arrangée entre deux couches en mousse (2a, 2b ; 62, 63) du corps (2).

15. Panneau composite adapté, en liaison (V) avec des panneaux similaires (101, 102), à construire dans un plan de panneau (E) une paroi, un panneau de paroi ou un recouvrement de paroi ou un toit ou un revêtement de toit et comportant à au moins deux bords opposés (104, 105) des moyens de liaison (106) complémentaires pour la liaison avec des panneaux composites adjacents et étant connectables à ceux-ci et, de préférence, avec un labyrinthe étanche à l'air et/ou à l'humidité, en formant une fente (100), une bande d'étanchéité (1) étant disposée de manière fixée en position sur au moins un bord du panneau composite (101, 102), pour rendre étanche ladite fente (100), **caractérisé en ce que** la bande d'étanchéité (1) est configurée selon l'une des revendications 1 à 14.

16. Panneau composite selon la revendication 15, **caractérisé en ce que** les panneaux composites (101, 102) comportent un noyau en mousse et, le cas échéant, une couche de couverture (101a, 102a) en un matériau non-mousse sur la surface de panneau à l'avant et/ou à l'arrière, et que le noyau en mousse est relié pas adhésion de matière à la bande d'étanchéité, de préférence directement par le matériau.

17. Procédé de fabrication d'une bande d'étanchéité selon l'une des revendications 1 à 14, selon lequel procédé est préparée une feuille de mousse (20) présentant une résistance à la traction donnée, au moins une couche de matériau (8) déformable étant fixée de manière permanente et de manière à recevoir la force de tension à la feuille (20) ou au corps, par exemple par collage, sur au moins un côté large de la feuille de mousse ou dans un plan parallèle au côté large à l'intérieur du corps, et présentant un plan médian principal M(B) de la feuille (20) disposé entre les deux côtés larges, ladite feuille (20) étant déformée de manière alternante dans des zones longitudinales de sorte que des parties de volume du matériau en mousse sont déplacées par rapport au plan médian principal M(B) de la feuille de l'un côté du plan médian principal de la feuille vers l'autre côté du plan médian principal, et après ladite feuille (20) étant séparée dans le sens longitudinal le long du plan médian principal de la feuille (20) ou d'un plan de séparation arrangé de manière parallèle à celui-ci, en formant deux sections de feuille (21, 22) d'un hauteur inférieur à celui-ci de la feuille (20), et après, le cas échéant, le tronçonnage des deux sections de feuille (21, 22) en sections longitudinales, avec formation d'une pluralité de bandes d'étanchéité (1), et que
(i) la couche de matériau (8) recevant la force de tension présente un allongement à la rupture de sorte que le corps en mousse (2) muni de ladite couche matériau (8) recevant la force de tension présente un allongement à la rupture de ≤ 25 % et l'allongement à la rupture du corps en mousse (2) est réduit par la couche de matériau (8) recevant la force de plus de 85 % par rapport à l'allongement à rupture du corps (2) pas muni de ladite couche de matériau (8) recevant la force de tension et
(ii) que le matériau de la couche de matériau (8) recevant la force de tension présente un allongement à la rupture de ≤ 50 % de l'allongement de rupture du corps en mousse (2), ledit allongement à la rupture selon (i) et (ii) étant respectivement rapporté à une section de test d'une largeur de 13 mm dans la direction longitudinale de la bande d'étanchéité.

18. Procédé selon la revendication 17, **caractérisé en ce que** selon ledit procédé, une couche de matériau (8) recevant la force de tension est respectivement fixée de manière permanente et de manière à recevoir la force de tension aux deux côtés larges opposés de la feuille de mousse (20) ou sur les deux côtés du plan médian principal M(B) de la feuille (20) respectivement dans un plan parallèle au côté large à l'intérieur du corps (2), mais à l'extérieur de la zone de séparation du corps (2).

19. Procédé selon la revendication 17 ou 18, **caractérisé en ce que** le profil de hauteur est formé par un procédé de découpe de contours.
